# EUROPEAN PATENT APPLICATION

(11) **EP 4 750 177 A1**
(43) Date of publication of application: **27.05.2026**
(21) Application number: 24843403.7
(22) Date of filing: 10.07.2024
(51) Int. Cl.: H04W 60/00, H04W 8/18, H04W 60/06, H04W 12/06

(54) **COMMUNICATION RELATED TO DUAL REGISTRATION**

(30) Priority: 18.07.2023 US 202363527338 P; 27.07.2023 US 202363529148 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR); KIM, Seokjung, Seoul 06772 (KR)
(74) Representative: Frenkel, Matthias Alexander
(86) International application number: PCT/KR2024/009820
(87) International publication number: WO 2025/018684

(57) **Abstract**

One embodiment of the present specification provides a method performed by an AMF. The method may include: receiving, from a UE, a registration request message including information related to dual registration; transmitting, to a UDM, a registration message including information related to the dual registration; receiving, from the UDM, a response message including information related to whether the dual registration is allowed; and transmitting, to the UE, a registration response message including information related to whether the dual registration succeeded.

## Description

### TECHNICAL FIELD

The present disclosure relates to mobile communication.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

A dual registration scheme, where a terminal registers via two 3GPP accesses, is being discussed. However, according to prior arts, the network cannot support dual registration of the terminal.

### DISCLOSURE

### TECHNICAL SOLUTION

According to an embodiment of the present disclosure, a method is provided for an AMF to perform communication. The method may include: receiving a registration request message including information related to dual registration from the UE; transmitting a registration message including the information related to dual registration to the UDM; receiving a response message including information related to whether to allow the dual registration from the UDM; and transmitting a registration response message including information related to whether the dual registration succeeded to the UE.

According to one embodiment, a device implementing the method is provided.

According to an embodiment of the present disclosure, a method for a UE to perform communication is provided. The method may include: transmitting a registration request message including information related to dual registration to an AMF; and receiving a registration response message including information whether the dual registration succeeded from the AMF.

According to an embodiment, a device implementing the method is provided.

According to an embodiment of the present disclosure, a method for a UDM to perform communication is provided. The method may include: receiving a first registration message related to a UE from a second AMF; receiving a second registration message from the second AMF including information related to dual registration for the UE; determining whether to allow the dual registration; and transmitting a response message including information related to whether to allow the dual registration to the second AMF.

According to one embodiment, a device implementing the method is provided.

### BRIEF DESCRIPTION OF THE DRAWINGS

FIG. 1 shows an example of a communication system to which implementations of the present disclosure are applied.
FIG. 2 shows an example of wireless devices to which implementations of the present disclosure are applied.
FIG. 3 shows an example of UE to which implementations of the present disclosure are applied.
FIG. 4 shows an example of 5G system architecture to which implementations of the present disclosure are applied.
FIGS. 5 and 6 show an example of a registration procedure to which implementations of the present disclosure are applied.
FIG. 7 is an exemplary diagram illustrating an example of an architecture for implementing the concept of network slicing.
FIG. 8 is an exemplary diagram illustrating another example of an architecture for implementing the concept of network slicing.
FIG. 9 illustrates an example of a dual 5G satellite access according to an embodiment of the present disclosure.
FIG. 10 illustrates an example of a traffic switching according to an embodiment of the present disclosure.
FIG. 11a is a first example of a multi connectivity according to an embodiment of the present disclosure. FIG. 11b is a second example of a multi connectivity according to an embodiment of the present disclosure. FIG. 11c is a third example of a multi connectivity according to an embodiment of the present disclosure. FIG. 11d is a fourth example of a multi connectivity according to an embodiment of the present disclosure.
FIG. 12 is an example of a single 3GPP access connectivity according to an embodiment of the present disclosure.
FIG. 13 is an example of a dual 3GPP access connectivity according to an embodiment of the present disclosure.
Fig. 14a and Fig. 14b are the first example of the procedure according to the first example of the present disclosure.
Fig. 15 is the second example of the procedure according to the first example of the present disclosure.
FIG. 16 is an example of a first procedure according to the fifth example of the present disclosure.
FIG. 17 is an example of a second procedure according to the fifth example of the present disclosure.
FIG. 18 illustrates examples of operations according to an embodiment of the present disclosure.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5G new radio (NR).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

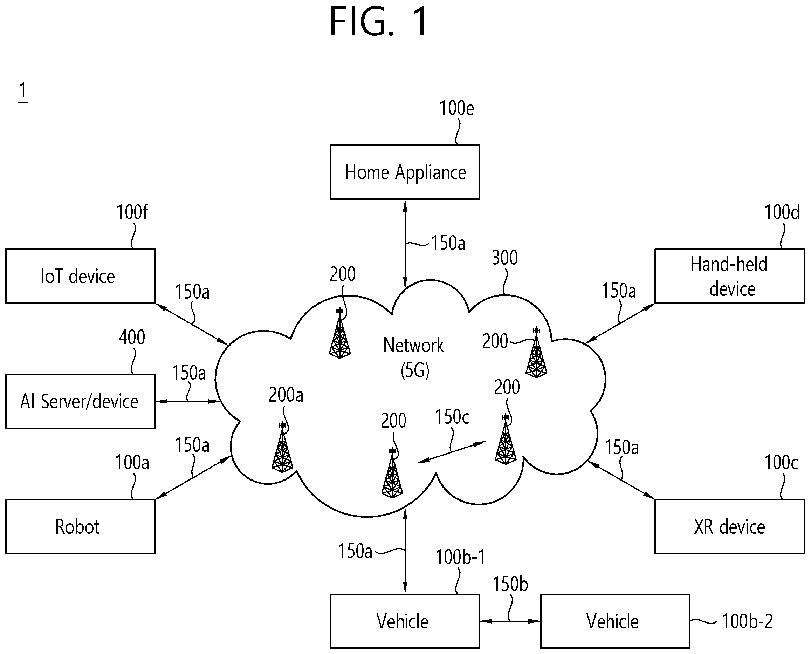

FIG. 1 shows an example of a communication system to which implementations of the present disclosure are applied.

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/5G devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of-things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

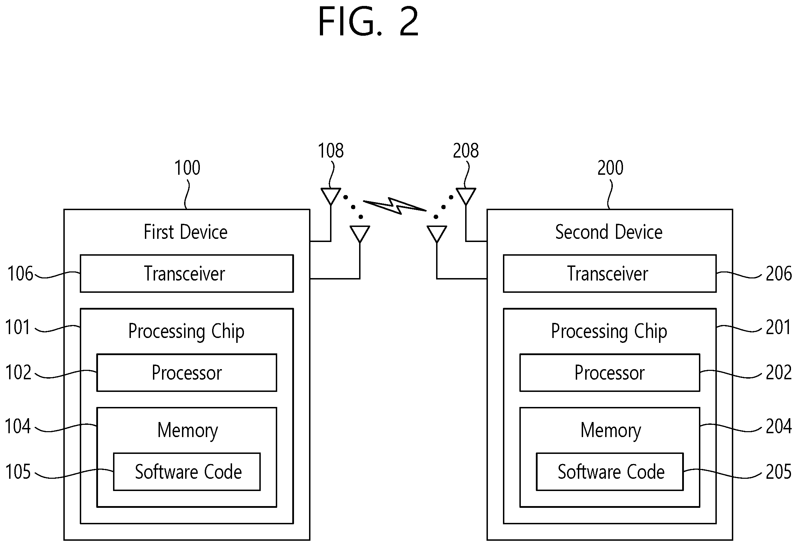

FIG. 2 shows an example of wireless devices to which implementations of the present disclosure are applied.

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor. The one or more memories 104 and 204 may be connected to the one or more processors 102 and 202 and store various types of data, signals, messages, information, programs, code, instructions, and/or commands. The one or more memories 104 and 204 may be configured by Random Access Memory (RAM), Dynamic RAM (DRAM), Read-Only Memory (ROM), electrically Erasable Programmable Read-Only Memory (EPROM), flash memory, volatile memory, non-volatile memory, hard drive, register, cash memory, computer-readable storage medium, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the descriptions, functions, procedures, suggestions, methods and/or operational flowcharts disclosed in the present disclosure, to one or more other devices. The one or more transceivers 106 and 206 may receive user data, control information, and/or radio signals/channels, mentioned in the descriptions, functions, procedures, suggestions, methods and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices.

The one or more transceivers 106 and 206 may be connected to the one or more antennas 108 and 208. Additionally and/or alternatively, the one or more transceivers 106 and 206 may include one or more antennas 108 and 208. The one or more transceivers 106 and 206 may be adapted to transmit and receive user data, control information, and/or radio signals/channels, mentioned in the descriptions, functions, procedures, suggestions, methods and/or operational flowcharts disclosed in the present disclosure, through the one or more antennas 108 and 208. In the present disclosure, the one or more antennas 108 and 208 may be a plurality of physical antennas or a plurality of logical antennas (e.g., antenna ports).

The one or more transceivers 106 and 206 may convert received user data, control information, radio signals/channels, etc., from RF band signals into baseband signals in order to process received user data, control information, radio signals/channels, etc., using the one or more processors 102 and 202. The one or more transceivers 106 and 206 may convert the user data, control information, radio signals/channels, etc., processed using the one or more processors 102 and 202 from the base band signals into the RF band signals. To this end, the one or more transceivers 106 and 206 may include (analog) oscillators and/or filters. For example, the one or more transceivers 106 and 206 can up-convert OFDM baseband signals to OFDM signals by their (analog) oscillators and/or filters under the control of the one or more processors 102 and 202 and transmit the up-converted OFDM signals at the carrier frequency. The one or more transceivers 106 and 206 may receive OFDM signals at a carrier frequency and downconvert the OFDM signals into OFDM baseband signals by their (analog) oscillators and/or filters under the control of the one or more processors 102 and 202.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in UL and as a receiving device in DL. In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

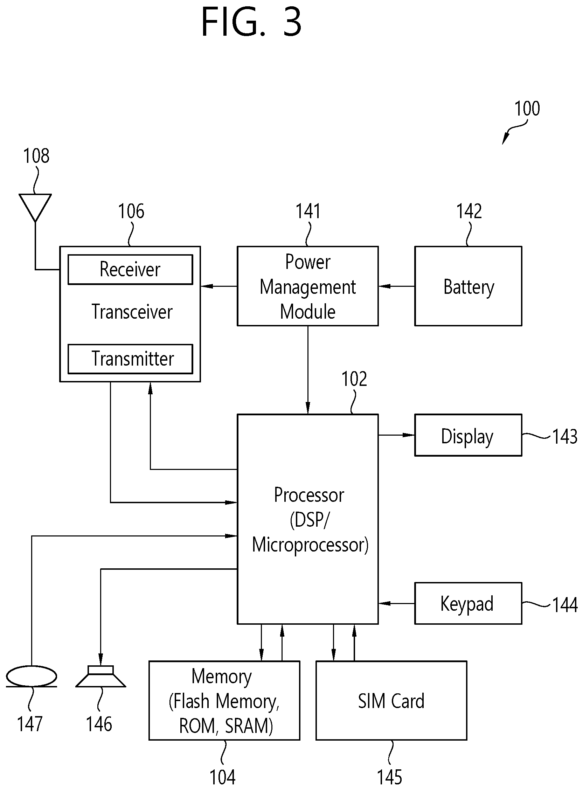

FIG. 3 shows an example of UE to which implementations of the present disclosure are applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

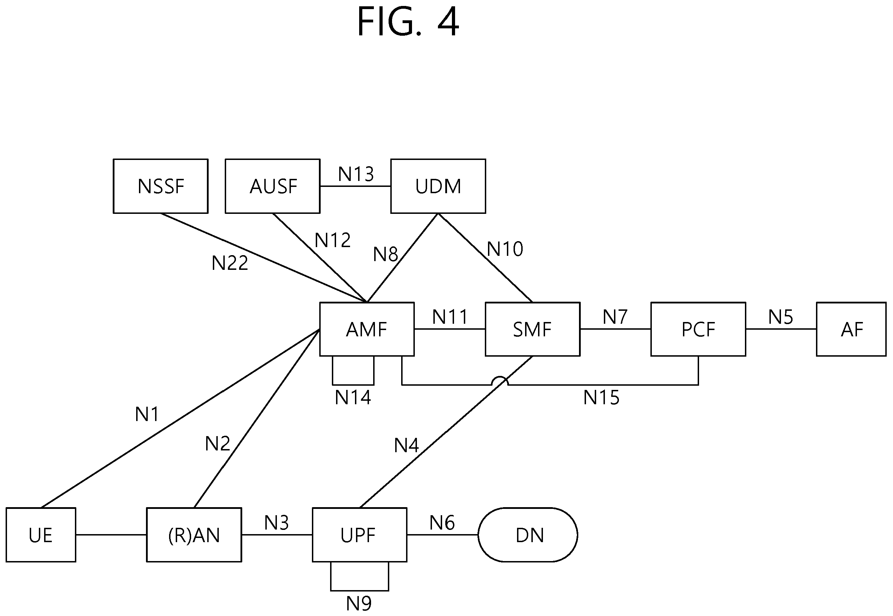

FIG. 4 shows an example of 5G system architecture to which implementations of the present disclosure are applied.

The 5G system (5GS) architecture consists of the following network functions (NF).
- Authentication Server Function (AUSF)
- Access and Mobility Management Function (AMF)
- Data Network (DN), e.g., operator services, Internet access or 3rd party services
- Unstructured Data Storage Function (UDSF)
- Network Exposure Function (NEF)
- Intermediate NEF (I-NEF)
- Network Repository Function (NRF)
- Network Slice Selection Function (NSSF)
- Policy Control Function (PCF)
- Session Management Function (SMF)
- Unified Data Management (UDM)
- Unified Data Repository (UDR)
- User Plane Function (UPF)
- UE radio Capability Management Function (UCMF)
- Application Function (AF)
- User Equipment (UE)
- (Radio) Access Network ((R)AN)
- 5G-Equipment Identity Register (5G-EIR)
- Network Data Analytics Function (NWDAF)
- CHarging Function (CHF)

Furthermore, the following network functions may be considered.
- Non-3GPP InterWorking Function (N3IWF)
- Trusted Non-3GPP Gateway Function (TNGF)
- Wireline Access Gateway Function (W-AGF)

FIG. 4 depicts the 5G system architecture in the non-roaming case, using the reference point representation showing how various network functions interact with each other.

In FIG. 4, for the sake of clarity of the point-to-point diagrams, the UDSF, NEF and NRF have not been depicted. However, all depicted Network Functions can interact with the UDSF, UDR, NEF and NRF as necessary.

For clarity, the UDR and its connections with other NFs, e.g., PCF, are not depicted in FIG. 4. For clarity, the NWDAF and its connections with other NFs, e.g., PCF, are not depicted in FIG. 4.

The 5G system architecture contains the following reference points:
- N1: Reference point between the UE and the AMF.
- N2: Reference point between the (R)AN and the AMF.
- N3: Reference point between the (R)AN and the UPF.
- N4: Reference point between the SMF and the UPF.
- N6: Reference point between the UPF and a Data Network.
- N9: Reference point between two UPFs.

The following reference points show the interactions that exist between the NF services in the NFs.
- N5: Reference point between the PCF and an AF.
- N7: Reference point between the SMF and the PCF.
- N8: Reference point between the UDM and the AMF.
- N10: Reference point between the UDM and the SMF.
- N11: Reference point between the AMF and the SMF.
- N12: Reference point between the AMF and the AUSF.
- N13: Reference point between the UDM and the AUSF.
- N14: Reference point between two AMFs.
- N15: Reference point between the PCF and the AMF in the case of non-roaming scenario, PCF in the visited network and AMF in the case of roaming scenario.
- N16: Reference point between two SMFs, (in roaming case between SMF in the visited network and the SMF in the home network).
- N22: Reference point between the AMF and the NSSF.

In some cases, a couple of NFs may need to be associated with each other to serve a UE.

A registration procedure is described. Reference may be made to section 4.2.2.2 of 3GPP TS 23.502 V16.3.0 (2019-12).

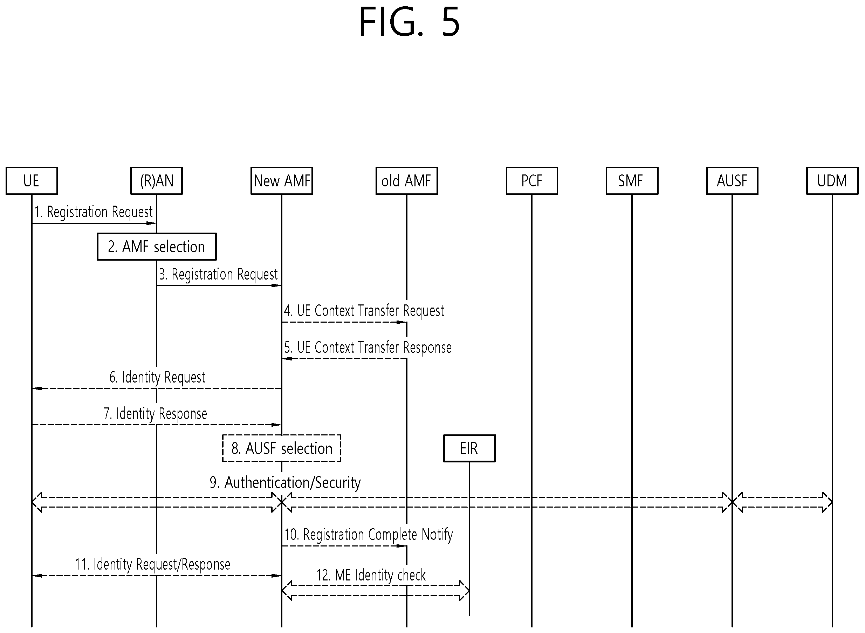

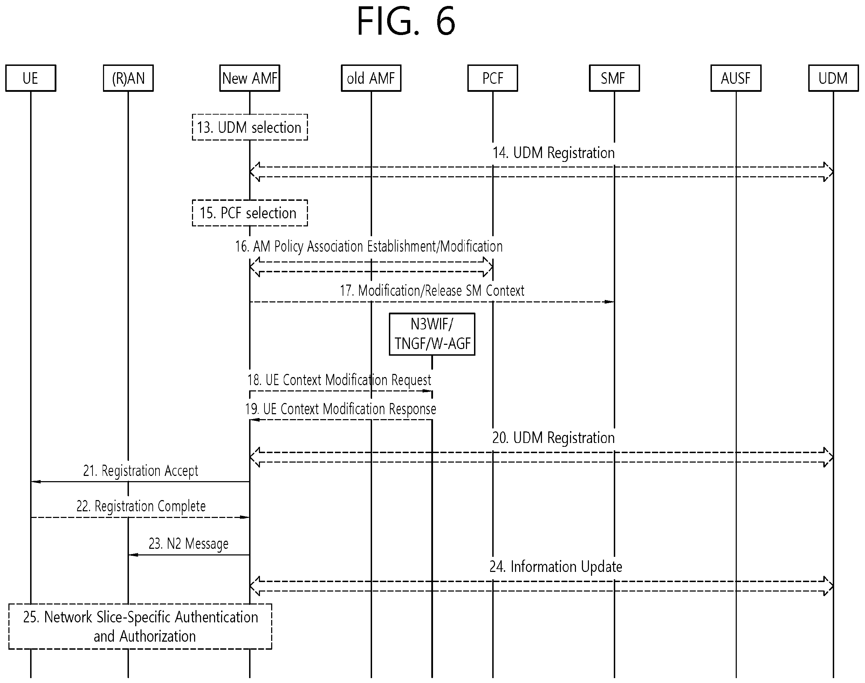

FIGS. 5 and 6 show an example of a registration procedure to which implementations of the present disclosure are applied.

A UE needs to register with the network to get authorized to receive services, to enable mobility tracking and to enable reachability. The UE initiates the registration procedure using one of the following registration types:
- Initial registration to the 5GS; or
- Mobility registration update; or
- Periodic registration update; or
- Emergency registration.

The general registration procedure in FIGS. 5 and 6 applies on all these registration procedures, but the periodic registration update need not include all parameters that are used in other registration cases.

The general registration procedure in FIGS. 5 and 6 is also used for the case of registration in 3GPP access when the UE is already registered in a non-3GPP access, and vice versa. Registration in 3GPP access when the UE is already registered in a non-3GPP access scenario may require an AMF change.

First, procedures of FIG. 5 are described.
(1) Step 1: The UE transmits a Registration Request message to the (R)AN. The Registration Request message corresponds to AN message.

The Registration Request message may include AN parameters. In the case of NG-RAN, the AN parameters include, e.g., 5G SAE temporary mobile subscriber identity (5G-S-TMSI) or globally unique AMF ID (GUAMI), the selected public land mobile network (PLMN) ID (or PLMN ID and network identifier (NID)) and Requested network slice selection assistance information (NSSAI). The AN parameters also include establishment cause. The establishment cause provides the reason for requesting the establishment of an RRC connection. Whether and how the UE includes the Requested NSSAI as part of the AN parameters is dependent on the value of the access stratum connection establishment NSSAI inclusion mode parameter.

The Registration Request message may include a registration type. The registration type indicates if the UE wants to perform an initial registration (i.e., the UE is in RM-DEREGISTERED state), a mobility registration update (i.e., the UE is in RM-REGISTERED state and initiates a registration procedure due to mobility or due to the UE needs to update its capabilities or protocol parameters, or to request a change of the set of network slices it is allowed to use), a periodic registration update (i.e., the UE is in RM-REGISTERED state and initiates a registration procedure due to the periodic registration update timer expiry) or an emergency registration (i.e., the UE is in limited service state).

When the UE is performing an initial registration, the UE shall indicate its UE identity in the Registration Request message as follows, listed in decreasing order of preference:
i) a 5G globally unique temporary identifier (5G-GUTI) mapped from an evolved packet system (EPS) GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.
v) Otherwise, the UE shall include its subscriber concealed identifier (SUCI) in the Registration Request message.

When the UE performing an initial registration has both a valid EPS GUTI and a native 5G-GUTI, the UE shall also indicate the native 5G-GUTI as additional GUTI. If more than one native 5G-GUTIs are available, the UE shall select the 5G-GUTI in decreasing order of preference among items (ii)-(iv) in the list above.

When the UE is performing an initial registration with a native 5G-GUTI, then the UE shall indicate the related GUAMI information in the AN parameters. When the UE is performing an initial registration with its SUCI, the UE shall not indicate any GUAMI information in the AN parameters.

For an emergency registration, the SUCI shall be included if the UE does not have a valid 5G-GUTI available; the permanent equipment identifier (PEI) shall be included when the UE has no subscriber permanent identifier (SUPI) and no valid 5G-GUTI. In other cases, the 5G-GUTI is included, and it indicates the last serving AMF.

The Registration Request message may also include security parameters, PDU Session Status, etc. The security parameters are used for authentication and integrity protection. The PDU Session Status indicates the previously established PDU sessions in the UE. When the UE is connected to the two AMFs belonging to different PLMN via 3GPP access and non-3GPP access then the PDU Session status indicates the established PDU Session of the current PLMN in the UE.

(2) Step 2: The (R)AN selects an AMF.

If a 5G-S-TMSI or GUAMI is not included or the 5G-S-TMSI or GUAMI does not indicate a valid AMF, the (R)AN, based on (R)AT and requested NSSAI, if available, selects an AMF.

If UE is in CM-CONNECTED state, the (R)AN can forward the Registration Request message to the AMF based on the N2 connection of the UE.

If the (R)AN cannot select an appropriate AMF, it forwards the Registration Request message to an AMF which has been configured, in the (R)AN, to perform AMF selection.

(3) Step 3: The (R)AN transmits a Registration Request message to the new AMF. The Registration Request message corresponds to N2 message.

The Registration Request message may include whole information and/or a part of information included in the Registration Request message received from the UE which is described in step 1.

The Registration Request message may include N2 parameters. When NG-RAN is used, the N2 parameters include the selected PLMN ID (or PLMN ID and NID), location information and cell identity related to the cell in which the UE is camping, UE context request which indicates that a UE context including security information needs to be setup at the NG-RAN. When NG-RAN is used, the N2 parameters shall also include the establishment cause.

If the Registration type indicated by the UE is Periodic Registration Update, then steps 4 to 19 may be omitted.

(4) Step 4: If the UE's 5G-GUTI was included in the Registration Request message and the serving AMF has changed since last registration procedure, the new AMF may invoke the Namf_Communication_UEContextTransfer service operation on the old AMF including the complete registration request non-access stratum (NAS) message to request the UE's SUPI and UE context.

(5) Step 5: The Old AMF may respond to the new AMF for the Namf_Communication_UEContextTransfer invocation by including the UE's SUPI and UE context.

(6) Step 6: If the SUCI is not provided by the UE nor retrieved from the old AMF, the identity request procedure may be initiated by the new AMF sending the Identity Request message to the UE requesting the SUCI.

(7) Step 7: The UE may respond with an Identity Response message including the SUCI. The UE derives the SUCI by using the provisioned public key of the home PLMN (HPLMN).

(8) Step 8: The new AMF may decide to initiate UE authentication by invoking an AUSF. In that case, the new AMF selects an AUSF based on SUPI or SUCI.

(9) Step 9: Authentication/security may be established by the UE, new AMF, AUSF and/or UDM.

(10) Step 10: If the AMF has changed, the new AMF may notify the old AMF that the registration of the UE in the new AMF is completed by invoking the Namf_Communication_RegistrationCompleteNotify service operation. If the authentication/security procedure fails, then the registration shall be rejected, and the new AMF may invoke the Namf_Communication_RegistrationCompleteNotify service operation with a reject indication reason code towards the old AMF. The old AMF may continue as if the UE context transfer service operation was never received.

(11) Step 11: If the PEI was not provided by the UE nor retrieved from the old AMF, the Identity Request procedure may be initiated by the new AMF sending an Identity Request message to the UE to retrieve the PEI. The PEI shall be transferred encrypted unless the UE performs emergency registration and cannot be authenticated.

(12) Step 12: Optionally, the new AMF may initiate ME identity check by invoking the N5g-eir_EquipmentIdentityCheck_Get service operation.

Now, procedures of FIG. 6, which follow the procedures of FIG. 5, are described.

(13) Step 13: If step 14 below is to be performed, the new AMF, based on the SUPI, may select a UDM, then UDM may select a UDR instance.

(14) Step 14: The new AMF may register with the UDM.

(15) Step 15: The new AMF may select a PCF.

(16) Step 16: The new AMF may optionally perform an AM Policy Association Establishment/Modification.

(17) Step 17: The new AMF may transmit Update/Release SM Context message (e.g., Nsmf_ PDUSession _UpdateSMContext and/or Nsmf_PDUSession_ReleaseSMContext) to the SMF.

(18) Step 18: If the new AMF and the old AMF are in the same PLMN, the new AMF may send a UE Context Modification Request to the N3IWF/TNGF/W-AGF.

(19) Step 19: The N3IWF/TNGF/W-AGF may send a UE Context Modification Response to the new AMF.

(20) Step 20: After the new AMF receives the response message from the N3IWF/TNGF/W-AGF in step 19, the new AMF may register with the UDM.

(21) Step 21: The new AMF transmits a Registration Accept message to the UE.

The new AMF sends a Registration Accept message to the UE indicating that the Registration Request has been accepted. 5G-GUTI is included if the new AMF allocates a new 5G-GUTI. If the UE is already in RM-REGISTERED state via another access in the same PLMN, the UE shall use the 5G-GUTI received in the Registration Accept message for both registrations. If no 5G-GUTI is included in the Registration Accept message, then the UE uses the 5G-GUTI assigned for the existing registration also for the new registration. If the new AMF allocates a new registration area, it shall send the registration area to the UE via Registration Accept message. If there is no registration area included in the Registration Accept message, the UE shall consider the old registration area as valid. Mobility Restrictions is included in case mobility restrictions applies for the UE and registration type is not emergency registration. The new AMF indicates the established PDU sessions to the UE in the PDU Session status. The UE removes locally any internal resources related to PDU sessions that are not marked as established in the received PDU Session status. When the UE is connected to the two AMFs belonging to different PLMN via 3GPP access and non-3GPP access then the UE removes locally any internal resources related to the PDU session of the current PLMN that are not marked as established in received PDU Session status. If the PDU Session status information was in the Registration Request message, the new AMF shall indicate the PDU Session status to the UE.

The Allowed NSSAI provided in the Registration Accept message is valid in the registration area and it applies for all the PLMNs which have their tracking areas included in the registration area. The Mapping Of Allowed NSSAI is the mapping of each S-NSSAI of the Allowed NSSAI to the HPLMN S-NSSAIs. The Mapping Of Configured NSSAI is the mapping of each S-NSSAI of the Configured NSSAI for the serving PLMN to the HPLMN S-NSSAIs.

Furthermore, optionally the new AMF performs a UE Policy Association Establishment.

(22) Step 22: The UE may send a Registration Complete message to the new AMF when it has successfully updated itself.

The UE may send a Registration Complete message to the new AMF to acknowledge if a new 5G-GUTI was assigned.

(23) Step 23: For registration over 3GPP Access, if the new AMF does not release the signaling connection, the new AMF may send the RRC Inactive Assistance Information to the NG-RAN. For registration over non-3GPP Access, if the UE is also in CM-CONNECTED state on 3GPP access, the new AMF may send the RRC Inactive Assistance Information to the NG-RAN.

(24) Step 24: The new AMF may perform information update towards the UDM.

(25) Step 25: The UE may execute Network Slice-Specific Authentication and Authorization (NSSAA) procedure.

<Network Slice>

Hereinafter, network slicing to be introduced in next-generation mobile communication will be described.

Next-generation mobile communication introduces the concept of network slicing in order to provide various services through one network. Here, the network slicing is a combination of network nodes having functions necessary to provide a specific service. A network node constituting a slice instance may be a hardware independent node or a logically independent node.

Each slice instance may be composed of a combination of all nodes necessary to configure the entire network. In this case, one slice instance may independently provide a service to the UE.

Alternatively, the slice instance may be composed of a combination of some nodes among nodes constituting the network. In this case, the slice instance may not provide a service to the UE alone, but may provide a service to the UE in association with other existing network nodes. In addition, a plurality of slice instances may provide a service to the UE in association with each other.

A slice instance is different from a dedicated core network in that the entire network node including the Core Network (CN) node and the RAN can be separated. In addition, a slice instance is different from a dedicated core network in that network nodes can simply be logically separated.

For reference, for a network slice, quota may be used.

For example, a quota related to a network slice may include a quota for the maximum number of UEs. The quota for the maximum number of UEs may mean the maximum number of terminals that can use a network slice at the same time. As an example, each network slice information may include quota information for the maximum number of UEs (e.g., 10 pieces, 1000000 pieces, etc.).

For example, a quota related to a network slice may include a quota for the maximum number of PDU sessions. The quota for the maximum number of PDU sessions may mean the maximum number of concurrent PDU sessions supported in the network slice. For example, the maximum number of concurrent (concurrent) PDU sessions supported in a network slice may mean the maximum number of PDU sessions established at the same time in one network slice related to a DNN (Data Network Name) defined by S-NSSAI.

In 5G mobile communication, network slice quota event notification may be supported in the network slice. For example, event notification about a quota related to a network slice may be supported. For example, an AF may request an event notification about a quota related to a network slice in 5GS. Then, AF may be notified of quota for attributes related to network slices in 5GS. For example, 5GS may inform the AF whether the quota for a particular attribute has reached a specified threshold. AF may then influence the 5GS routing decision.

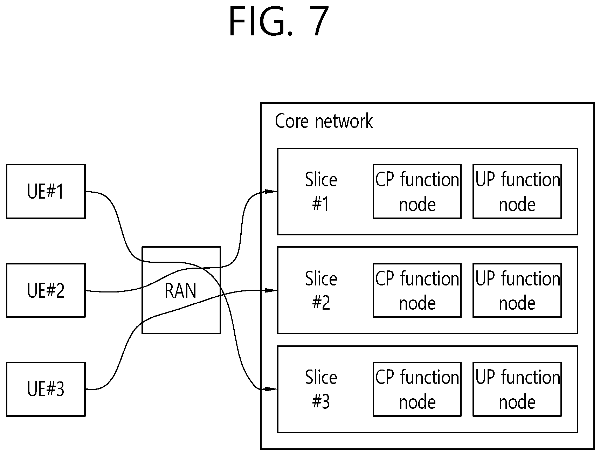

**FIG. 7** **is an exemplary diagram illustrating an example of an architecture for implementing the concept of network slicing.**

As can be seen with reference to FIG. 7, the Core Network (CN) may be divided into several slice instances. Each slice instance may include one or more of a CP function node and a UP function node.

Each UE may use a network slice instance suitable for its own service through the RAN.

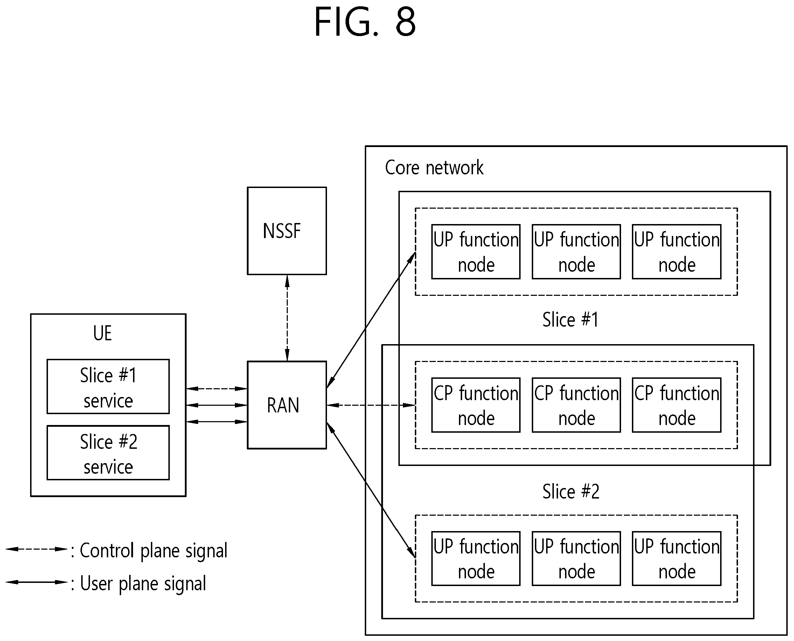

Unlike shown in FIG. 7, each slice instance may share one or more of a CP function node and a UP function node with another slice instance. This will be described with reference to FIG. 8 as follows.

**FIG. 8** **is an exemplary diagram illustrating another example of an architecture for implementing the concept of network slicing.**

Referring to FIG. 8, a plurality of UP functional nodes is clustered, and similarly, a plurality of CP functional nodes is also clustered.

And, referring to FIG. 8, slice instance #1 (or referred to as instance #1) in the core network includes the first cluster of UP functional nodes. And, the slice instance #1 shares a cluster of CP functional nodes with slice #2 (or referred to as instance #2). The slice instance #2 includes a second cluster of UP functional nodes.

The illustrated NSSF selects a slice (or instance) that can accommodate the service of the UE.

The illustrated UE may use service #1 through the slice instance #1 selected by the NSSF, and may use service #2 through the slice instance #2 selected by the NSSF.

In 3GPP, a study titled FS_DualSteer (Study on Upper layer traffic steering, switching and split over dual 3GPP access - SP-220445) is being discussed. Dual Steer may include use cases and service requirements related to steering, splitting, and switching UE traffic across two 3GPP access links, for example. Specifically, the study is being conducted for objectives such as the following examples. Examples of use cases and service requirements may be found in TR 22.841 V1.1.0 "Study on Upper layer traffic steer, switch and split over dual 3GPP access".

Examples of objectives related to dual steering are as follows.

Assuming only a single subscription exists for two 3GPP access links, including the following scenario, additional use cases and potential service requirements that could benefit from UE traffic support for higher layer steering, split, and switching in the 5GS (e.g., related to the same data session) are studied:
- Single PLMN, PLMN plus (standalone) NPN, two PLMNs
- Same or different 3GPP RAT (NR or NTN, NR, NTN, or LTE)

Note: NTN may refer to an NR-based satellite access that includes various orbits (e.g., GEO/MEO/LEO). GEO/MEO/LEO stand for Geostationary Earth Orbit (GEO), Medium Earth Orbit (MEO), and Low Earth Orbit (LEO), respectively.

For PLMN plus PLMN/NPN scenarios, the two networks may be managed by the same operator or by different operators (assuming a business agreement exists between the operators).

The study related to dual steering includes a gap analysis concerning support for use cases identified by existing service requirements and functions, including the potential applicability of existing multi-NW requirements (e.g., TS 22.261 V19.3.0 Sections 6.1, 6.3, 6.18, 6.41).

The use case examples in TR 22.841 V1.1.0 are as follows.

This describes an example of an use case for a dual 5G satellite access in a maritime scenario.

This use case describes a scenario where an autonomous ship is remotely controlled from land. The ship has a UE served by two satellite RANs (GEO and LEO) belonging to the same PLMN managed by the 5G satellite operator. The ship UE has a single PLMN subscription.

Dual 5G satellite access is applied to accommodate the large data traffic volumes required for remote control operations. To enhance autonomous ship operation performance, delay-sensitive applications (e.g., remote control operations, collision/accident prevention, emergency management) utilize LEO satellite links with smaller UE-to-ground propagation delays (LEO max 30ms vs. GEO max 280ms, TS 22.261 V19.3.0 Clause 7.4.1). Other applications (e.g., delay-sensitive applications such as sensor data monitoring, video surveillance, etc.) may use GEO satellite links or aggregate traffic across both accesses.

The following preconditions may apply to this use case.

The autonomous ship may be, for example, a KASS (Korean Autonomous Surface Ship). This autonomous ship may support an dual 5G satellite connectivity (GEO and LEO).

The UE installed on the autonomous ship has a subscription to use the GEO and LEO satellite services of the 5G satellite operator.

The UE installed on the autonomous vessel registers and connects to both GEO and LEO satellite RANs.

Pursuant to the service agreement between the autonomous vessel management company and the 5G satellite operator, the 5G satellite network maintains the following policies for the autonomous ship's UE:
- Data traffic for latency-sensitive applications is routed via LEO satellite links whenever available.
- Data traffic for delay-tolerant applications is aggregated via LEO and GEO satellite links.

For use cases related to autonomous ships, service flows such as the example below may be applied.

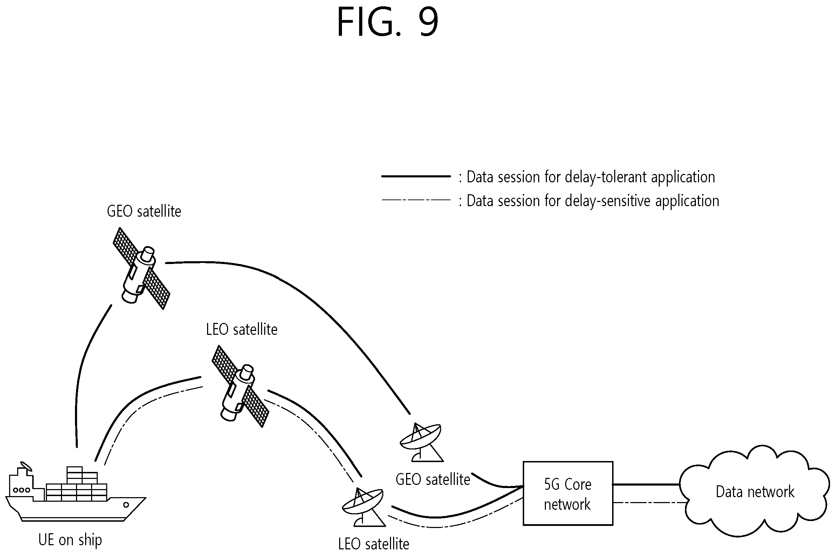

Referring to FIG. 9, a specific example of dual 5G satellite access during autonomous ship operation is illustrated.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 9** **illustrates an example of a dual 5G satellite access according to an embodiment of the present disclosure.**
1. Autonomous ships are located at sea and can be remotely controlled by a coastal control center. An autonomous vessel may have two active data sessions: one for remote control operations and one for monitoring the vessel's sensor data. According to agreed policies, remote control operation traffic (e.g., delay-sensitive traffic) is routed via LEO satellite links, while sensor data monitoring traffic (e.g., delay-tolerant traffic) is aggregated via LEO and GEO satellite links.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

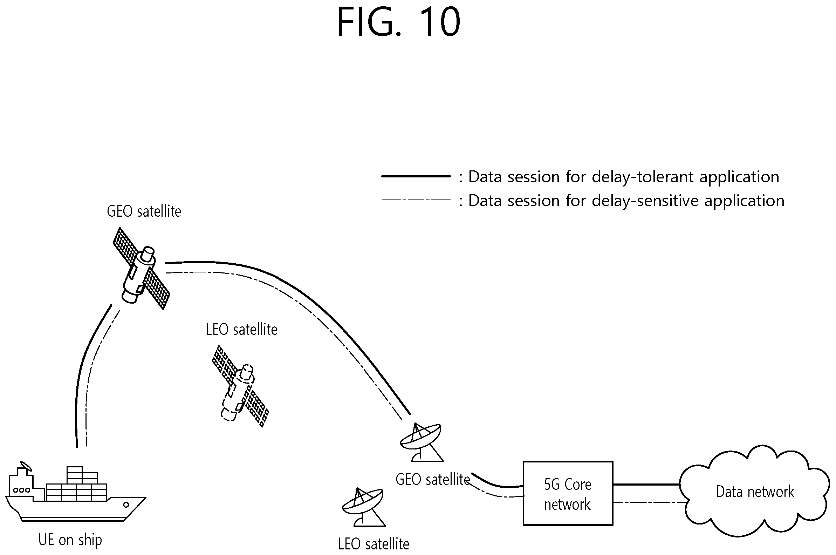

**FIG. 10** **illustrates an example of a traffic switching according to an embodiment of the present disclosure.**

FIG. 10 illustrates an example of traffic switching due to disconnection from the LEO satellite access network.

2. When LEO satellite access becomes unavailable (e.g., due to loss of line of sight between the UE and the satellite). Consequently, all traffic routed via LEO satellite access is redirected to GEO satellite access while maintaining the continuity of the data session. Applications for ship remote control (latency-sensitive) detect the increased communication delay and adjust their operation accordingly.

3. After a short time, LEO satellite access becomes available again. Therefore, the traffic distribution between the two satellite access points returns to the state seen in step 1.

The postconditions are as follows. The remote control center controls the autonomous ship throughout the route, and the autonomous ship may successfully arrive at its destination.

This describes examples of existing functions that encompass some or all of the use case functionality.

The ATSSS functionality specified in TS 23.501 V17.2.2 Section 5.32 supports dual user plane connections between a UE using one 3GPP access network and one non-3GPP access network and the data network.

The 5G system shall be capable of dynamically offloading a portion of traffic based on operator policy, considering traffic load and traffic type (e.g., offloading from a 3GPP RAT to a non-3GPP access technology).

According to operator policy, a 5G system may provide simultaneous data transmission over different access technologies (e.g., NR, E-UTRA, non-3GPP) to access one or more 3GPP services.

When a UE uses two or more access technologies simultaneously, the 5G system must be able to optimally distribute user traffic by selecting one of the access technologies in use, considering factors such as the service, traffic characteristics, radio characteristics, and the UE's movement speed.

The 5G system shall support UEs with multiple radio and single radio capabilities.

The 5G system may provide services using satellite access.

A satellite-enabled 5G system shall support various configurations where the radio access network is a satellite NG-RAN, a non-3GPP satellite access network, or both.

Potential new requirements needed to support use cases may include the following examples. The 5G system must support mechanisms to coordinate, split, and transfer user plane traffic across two 5G satellite access networks belonging to the same PLMN, where the user plane traffic is anchored to the 5GC.

The use case for NTN-based dual 3GPP access is described.

When two 3GPP access links are integrated simultaneously and one of them is a non-terrestrial network, the following 5G services may be provided. This can be particularly useful in underserved areas where bandwidth is limited or access links are unstable:
- Extended mobile broadband
- Ultra-reliable service communication

Various service scenarios (e.g., residential users in remote areas, vehicles, high-speed trains, ships, or aircraft passengers) may benefit from combining terrestrial and non-terrestrial access, or combining two non-terrestrial access methods (e.g., GSO and NGSO-based), to meet target service performance in terms of data speed and/or reliability.

In areas where service is not provided, the bandwidth offered by terrestrial-based access (e.g., NR or LTE) may be limited at the cell edge. Adding NTN-based NG-RAN can achieve the targeted perceived data speed.

In certain scenarios, such as inside high-speed trains, the service area may not be completely uniform along the track. The desired stability may be provided through multi connectivity, including NTN-based NG-RAN.

Therefore, a single UE can be connected and simultaneously served by the following examples:
- One NTN-based 3GPP access and one ground-based 3GPP access
- One NTN-based 3GPP access (NGSO) and another NTN-based 3GPP access (GSO)
- One NTN-based 3GPP access (NGSO) via two different satellites from the same constellation.

Dual access aggregation may occur for the uplink or downlink or both.

The same or different gNBs may provide service to an NR cell via a terrestrial access network and a satellite access network (e.g., transparent payload on board a satellite).

An NTN-based NG-RAN may refer to transparent payload satellites as well as, for example, regenerative payload satellites equipped with some gNB functions.

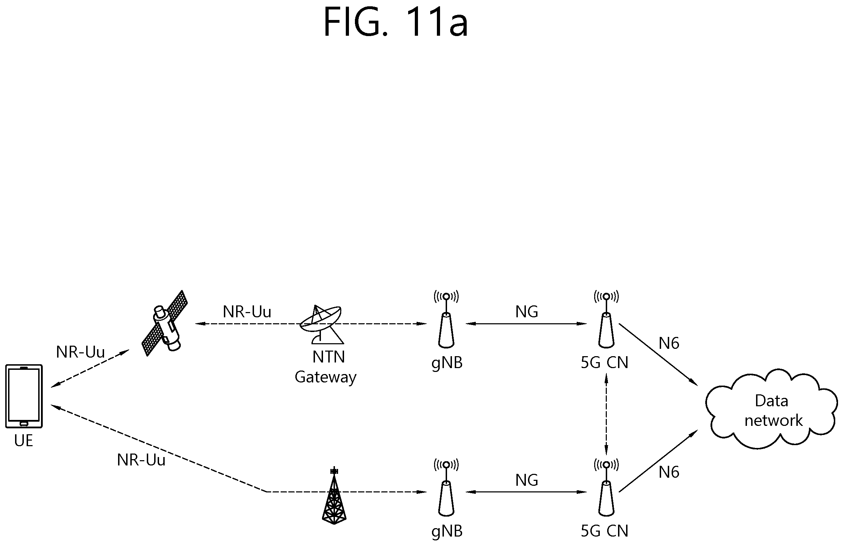

Referring to FIGS. 11a through 11d below, examples a) through d) are described.

### a) Multi-connectivity that includes transparent payload NTN-based NG-RAN and terrestrial NG-RAN

The UE connects to the 5GCN simultaneously via two accesses (e.g., transparent NTN-based NG-RAN and cellular NG-RAN). It is assumed that the NTN gateway is located within the PLMN area of the cellular access network.

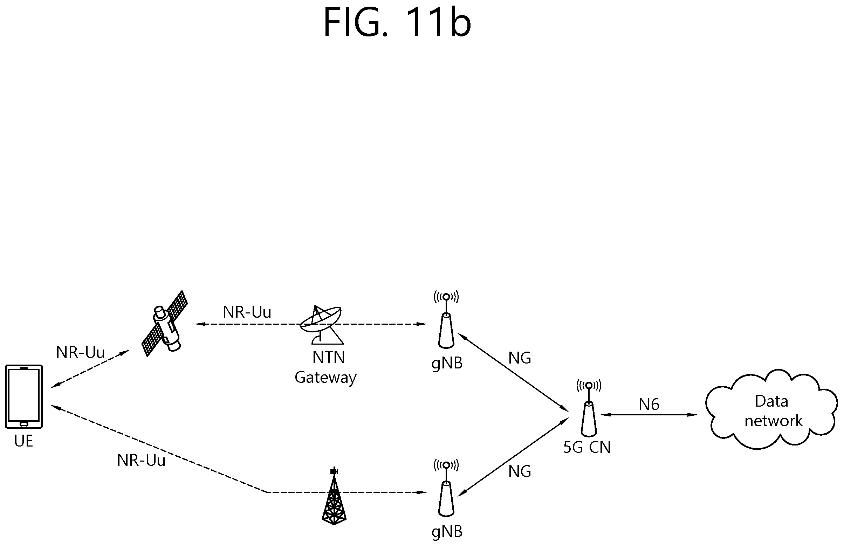

Referring to the examples in FIGS. 11a and 11b, an example of multi-connectivity that includes a transparent payload NTN-based NG-RAN and a terrestrial NG-RAN is described.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 11a** **is a first example of a multi connectivity according to an embodiment of the present disclosure.**

In the example of FIG. 11a, different operators may manage two PLMNs for multi-connectivity (assuming a business agreement exists between the two operators).

The example of FIG. 11a illustrates multi-connectivity that includes different PLMNs of a transparent NTN-based NG-RAN and a cellular NG-RAN.

As shown in FIG. 11a, the UE may connect to an access based on a transparent NTN-based NG-RAN (e.g., satellite, NTN gateway, gNB, access via the first operator's 5G CN). Additionally, the UE may connect to an access based on a terrestrial NG-RAN connected to the second operator's 5G-CN.

Alternatively, as exemplified in FIG. 11b, the two accesses for multi connectivity may be managed by the same operator.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 11b** **is a second example of a multi connectivity according to an embodiment of the present disclosure.**

In the example of FIG. 11b, PLMNs may be managed by the same operator. FIG. 11b depicts multi-connectivity (same PLMN) including transparent NTN-based NG-RAN and cellular NG-RAN.

### b) Multi-connectivity including two transparent NTN-based NG-RAN accesses

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

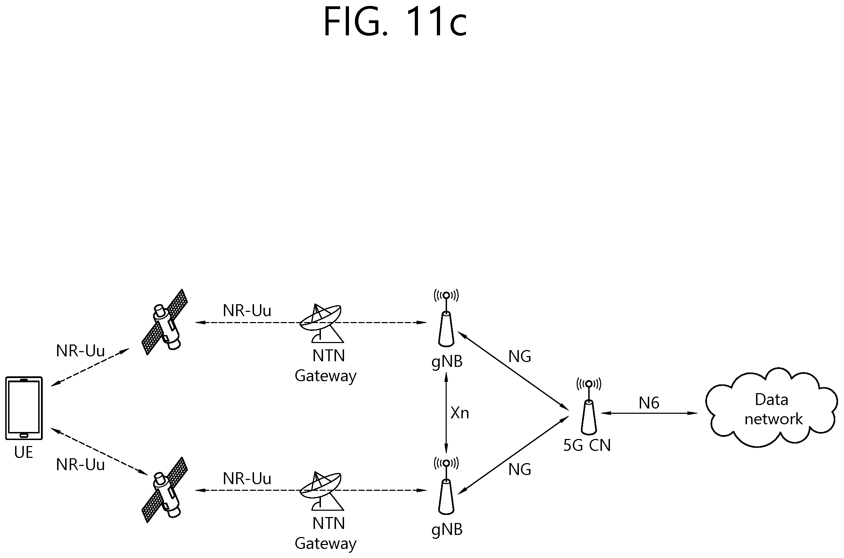

**FIG. 11c** **is a third example of a multi connectivity according to an embodiment of the present disclosure.**

FIG. 11c illustrates a multi connectivity between two transparent NTN-based NG-RANs.

For example, referring to FIG. 11c, multi-connectivity may include a combination of two transparent NTN-based NG-RANs (e.g., GSO and NGSO-based). This can be useful for providing service to UEs in areas where service is not provided. The example in FIG. 11c illustrates that a relatively low-latency NGSO-based NG-RAN may be used to support latency-sensitive traffic, while a GSO-based NG-RAN may be employed to provide additional bandwidth to meet target throughput requirements.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

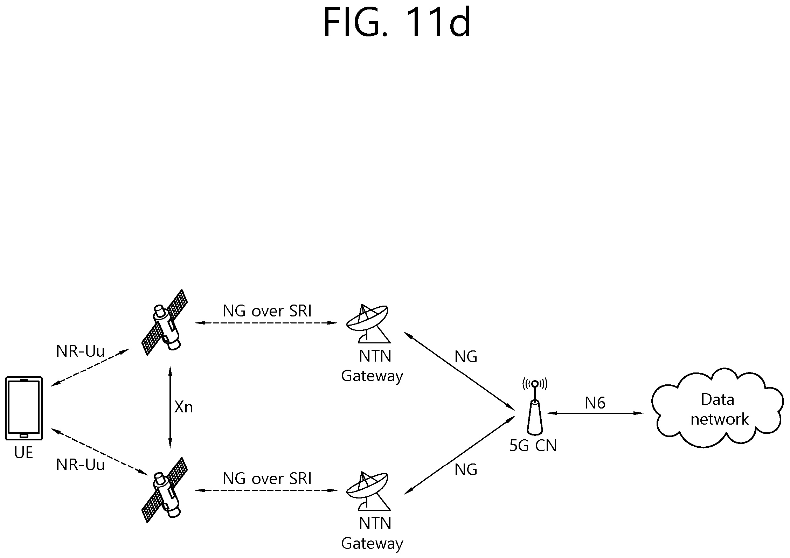

**FIG. 11d** **is a fourth example of a multi connectivity according to an embodiment of the present disclosure.**

FIG. 11d illustrates an example of a multi connectivity between two regenerative NTN-based NG-RANs (e.g., gNB onboard).

The example according to FIG. 11d is c) an example of combining two regenerative NTN-based NG-RANs (gNBs onboard) via an inter-satellite link through two satellites in the same constellation.

For reference, FIG. 11d is provided as an example. Other architectures (e.g., satellite-ground split NG-RAN architecture) may be considered. SRI denotes the satellite radio interface in FIG. 11d.

Examples of prerequisites related to this use case are as follows.

There may be some coverage overlap between the two related NG-RAN access links.

If the PLMNs of the two access links are the same, the UE connects to the 5GC providing both access links.

The 5GC is aware of the characteristics of each of the two access links.

If each access link has a different PLMN, the UE also gains access to the other network through a roaming agreement. Information about the characteristics of each access link may be exchanged between the two networks.

The UE is in connected mode on one or more access links.

The slice may be deployed and may be managed on both access links.

An example of the service flow related to this use case is as follows.

The UE performs the configuration of a VoIP, video, or data service over one 3GPP access link, but the QoS (e.g., throughput, latency, etc.) may be insufficient. If another 3GPP access link is available, this link is activated and combined with the first link to support the QoS required for the service.

Depending on the target QoS of the service, user plane traffic on the connection may be intelligently coordinated, split, and switched bidirectionally between the two 3GPP NG-RAN access links based on specific performance characteristics of each access link, such as delay, throughput, jitter, and error rate.

The QoS requirements for user plane traffic may be determined through specific policies related to different data flows or different traffic types within the same data flow.

Traffic is steered/split between access links based on QoS requirements such as latency, throughput, jitter, and error rate, traffic characteristics, wireless link conditions, and the UE's mobility rate. For example, traffic requiring low latency may be best split/steered to the access link with the lowest latency characteristics.

In the event of a handover, temporary wireless link failure, or congestion on one access link, user plane traffic may be switched to the remaining active access link. When the wireless link is re-configured, the user plane is re-split/steered across the two access links according to QoS.

The data volume and other traffic statistics reported from each access link are used for billing purposes.

According to the post-conditions, a dual NG-RAN access connection that includes at least NTN may support targeted QoS that a single access cannot support, thanks to the appropriate steering, splitting, and switching of user plane traffic.

Examples of existing capabilities that partially or fully encompass the use case functionality are as follows.

This use case may leverage and extend some of the following existing service requirements:
- Multiple Access Technology (See TS 22.261 V19.3.0 S6.3)
- Multi-network connectivity and Service Provisioning between Operators (See TS 22.261 V19.3.0 S6.18)
- Network Slicing (see TS 22.261 V19.3.0 S6.1)
- Efficient User Plane (see TS 22.261 V19.3.0 S6.5)

Potential new requirements needed to support use cases include, for example, the following.

Based on the use of at least one NR satellite RAT, the 5G system should support simultaneous data transmission for a UE related to the same data session across two 3GPP 5G access networks, depending on operator policy. Based on the connection conditions of the two access networks (e.g., radio characteristics, mobility, congestion) and the UE's movement speed, the 5G system may optimally distribute user traffic between the two access networks.

When two 5G access networks are used simultaneously for the same data session, the 5G system may collect charging information for both links simultaneously.

Note that when the two 5G access networks belong to different PLMNs, single subscription and data anchoring to the HPLMN 5G CN are assumed.

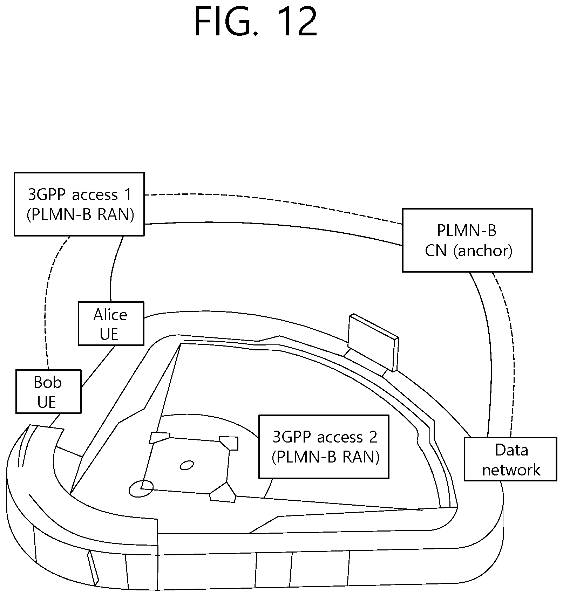

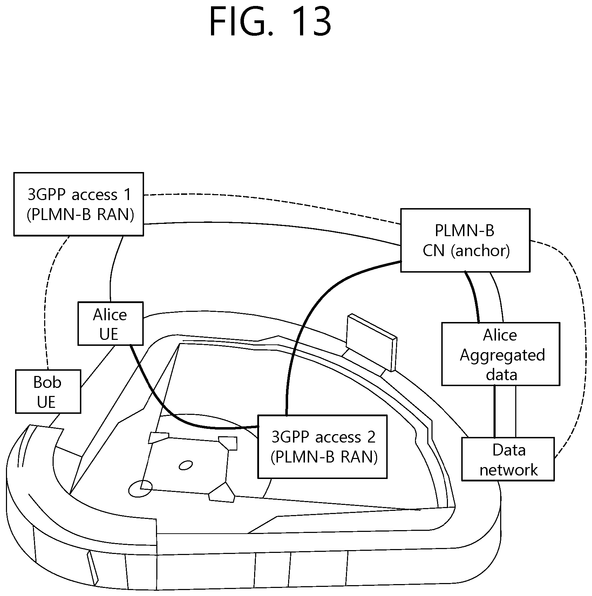

Below, with reference to FIG. 12 and FIG. 13, we describe the use case for the PLMN-to-PLMN scenario or the PLMN-SNPN scenario.

This example scenario depicts a scenario used in a stadium where an ad-hoc/in-venue 5G NR deployment (high-capacity) is provided by one SNPN or PLMN network (MNO-A), and 5G NR coverage is provided by another PLMN (MNO-B) outside the stadium. There is no network sharing between the two 5G networks. Here, MNO stands for Mobile Network Operator.

The above example may similarly apply to other regional business sites such as campuses, enterprises, shopping malls, and factories.

MNO-B has a business and roaming partnership with MNO-A that includes a contract to lease additional capacity (from MNO-A) to provide an ultra-broadband experience to certain MNO-B premium customers (e.g., "golden" customers). The agreement between MNO-A and MNO-B includes the capability to allow MNO-B users' data traffic to utilize additional NR connection links in PLMN-A, enabling connection at faster data speeds (including anchoring and aggregation to the CN in HPLMN). These capabilities are assumed to be supported by the CNs of both PLMNs and the UE (of the golden MNO-B user), and are associated with a set of traffic policies and conditions negotiated by the MNOs. These capabilities may be controlled by the HPLMN and provisioned (to UE and CN entities).

Examples of preconditions related to this use case are as follows.

Alice and Bob have come to the stadium to see a concert by their favorite singer. Alice is a golden subscriber of MNO-B, and Bob is a "regular" MNO-B customer. Referring to the examples in FIG. 12 and FIG. 13, Bob UE (Bob's UE) and Alice UE (Alice's UE) are shown.

Both UEs are camped on and registered on MNO-B's network and are in the Idle state. Alice's UE supports dual (NR) radio.

Alice's specific traffic policy, part of the MNO-B "Golden User" contract, includes dual access usage for high-quality video calls based on QoS or traffic type. Otherwise, Alice's UE must use MNO-B single access/link.

The service flows in FIGS. 12 and 13 are as follows:

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 12** **is an example of a single 3GPP access connectivity according to an embodiment of the present disclosure.**

Referring to FIG. 12, Bob UE and Alice UE are shown. In FIG. 12, both Bob UE and Alice UE connect to the data network in PLMN-B based on 3GPP Access 1.
1) Before the concert begins, Alice and Bob make voice calls to their best friends, describing the stadium atmosphere and promising to share concert videos later. Both use a single 3GPP access connection (via PLMN-B).

FIG. 12 illustrates an example of the Alice & Bob data session using a single 3GPP access connection, as per Step 1.

The following figures have been prepared to illustrate specific examples of the present disclosure. The names of specific devices, signals, messages, or fields shown in the figures are provided merely as examples; therefore, the technical features of the present disclosure are not limited to the specific names used in the following figures.

**FIG. 13** **is an example of a dual 3GPP access connectivity according to an embodiment of the present disclosure.**

Referring to FIG. 13, Alice's UE uses both a connection based on 3GPP Access 1 and a connection based on 3GPP Access 2.

2) When the concert begins, Alice and Bob decide to start a video call (with friends) to share the real-time experience (high-quality video configuration). Alice's UE registers with NW-A and configures a dual access connection spanning both networks. Bob's UE continues to use single access via PLMN-B.

FIG. 13 illustrates Alice's data session scenario using dual 3GPP access connections according to Phase 2.

3) Alice and Bob end the video call and continue enjoying the concert.

According to the use case referenced in FIG. 12 and FIG. 13, Alice's video quality was significantly better than Bob's.

Examples of existing functions that partially or fully encompass the use case functionality are described.
A) Steps 2 and 3 include a feature called ATSSS (Access Traffic Steering, Switching, Splitting). A feature similar to the one described in this use case is supported by TS 25.301 V17.0.0 Section 5.3.2, but it is limited to 3GPP access and non-3GPP dual access.
B) Existing service requirements (e.g., TS 22.261 V19.3.0 S6.18 and S6.41) capture some general multi-NW connection requirements but do not fully address or satisfy specific target use cases and functionalities. For example, in prior arts, for users subscribed to a single operator, the use of multiple service networks operated by different operators is under the control of the home operator. For example, according to prior arts, when multiple operators provide the same service, the UE must preferentially receive the subscribed service from the home operator's network unless directed otherwise by the home operator's network. In this case, if the service is unavailable on the home operator's network (e.g., due to insufficient network coverage), the UE may receive the service from another operator's network. In prior arts, the QoS provided by a partner operator's network for the same service may vary depending on the agreement between the two operators and may differ from that provided by the home operator's network.

Examples of potential new requirements needed to support use cases are as follows.

A 5G system must be able to support mechanisms that coordinate, split, and switch a user plane traffic session for a UE across two 5G networks belonging to two different PLMN operators (one of which is the HPLMN), or between the HPLMN and an SNPN, for a single data session.

It is assumed that an HPLMN subscription is used to access both networks, data traffic is anchored to the HPLMN, and appropriate business agreements exist between the two network operators, including specific traffic routing policies based on geographic location, subscription, and traffic type.

This section describes examples of use cases for UEs utilizing terrestrial and satellite access.

Satellite access, known for its wide coverage, may enhance service availability in areas where terrestrial access network coverage or propagation conditions (e.g., multipath interference) are poor. When a high-speed moving UE requests real-time services such as IMS voice/video conferencing, it can be dual-connected to the 5G system simultaneously via terrestrial and satellite access. This enables the UE to receive continuous and stable service while minimizing the impact of terrestrial access network outages.

Eric is traveling to Saudi Arabia for a business trip. He takes the Haramain high-speed train, crossing 450 kilometers of desert at 300 km/h from Makkah to Madinah to visit a client. Even while traveling, he must handle urgent business via online video conference and resolve all issues before arrival.

An example of the prerequisite conditions is as follows.

TerrA's terrestrial access network provides good coverage in urban areas, suburban areas, and intermediate railway stops, but coverage is limited in rural areas and deserts between intermediate stops. Operator SatA's satellite access network (e.g., LEO) covers the entire country, and SatA may provide communication services independently. For reference, TerrA is a terrestrial network operator, and SatA is a satellite network operator.

Based on this agreement, TerrA may route, switch, or split the user's traffic to the SatA network's data path and may integrate it into TerrA's 5GC, considering SatA's service availability or coverage.

Eric's UE (e.g., mobile phone or wireless network card) is capable of dual 3GPP radio access, including satellite access, and is subscribed to the service-approved TerrA (PLMN NetA).

By default, only terrestrial access is enabled.

An example service flow is as follows.

Eric arrives at Makkah Train Station and activates the UE's satellite access while waiting to check in.

The UE registers with NetA based on service preferences (e.g., instant chat when terrestrial access is preferred, HD TV when satellite access is preferred) via terrestrial access and satellite access networks.

After Eric connects, the online video conference initially starts via the terrestrial access network. During the one-hour meeting, the UE's traffic autonomously steers, switches, or splits between the terrestrial and satellite network traffic paths with the assistance of TerrA's core network, converging at TerrA's core network to ensure the video conference proceeds without interruption.

Upon the train's arrival at its destination, Eric deactivates the satellite access function, and the UE updates its registration with NetA.

The postconditions related to the use case example are as follows: for example, the video conference completes smoothly without interruption. The user remains unaware of any path adjustments, switching, or splitting during the video conference.

Examples of existing features that partially or fully encompass the use case functionality are described as follows.

The 5G system shall support UEs with both multi-radio and single-radio capabilities.

The 5G system must support the capability to steer the UE to select a specific 3GPP access network according to operator policy.

Depending on operator policy, the 5G system may provide simultaneous data transmission over different access technologies (e.g., NR, E-UTRA, non-3GPP) to access one or more 3GPP services.

A UE may simultaneously use two or more access technologies. In this case, the 5G system must be able to optimally distribute user traffic by selecting one of the access technologies in use, considering factors such as service, traffic characteristics, radio characteristics, and the UE's movement speed.

The 5G system must support data transmission optimized for different access technologies (e.g., 3GPP, non-3GPP) for UEs accessing the network simultaneously via different connections.

Service continuity between 5G terrestrial access networks owned by the same operator or by another operator under contract, and 5G satellite access networks, must be supported by the 5G system.

Examples of potential new requirements needed to support use cases are as follows.

For example, a 5G system must support a mechanism that coordinates a user's traffic between different 3GPP access networks and core networks for a UE using dual 3GPP access, considering factors such as service preference, traffic characteristics, radio characteristics, and QoS. For example, the 5G system should support seamless service continuity by switching and splitting user traffic paths between different 3GPP access networks and core networks for UEs using dual 3GPP access (e.g., NR and satellite access), based on network availability, service preference, etc.

The above use cases show that services may be provided to the UE via two 3GPP accesses (or 3GPP access links). For example, the UE may receive services from two 3GPP accesses connected to a single CN (Core Network) (or from two 3GPP accesses belonging to the same network). Alternatively, the UE may receive services from two 3GPP accesses connected to different CNs (or from two 3GPP accesses belonging to different networks). Here, the network may be a PLMN or an NPN.

Furthermore, for certain services, traffic may be steered, switched, and split through a PDU Session formed via two 3GPP accesses. Here, this PDU session may be referred to as a Multi-Access (MA) PDU Session. In prior arts, MA PDU Sessions were established via 3GPP access and non-3GPP access; in the present disclosure, a PDU Session may be established via two 3GPP accesses.

For certain services, traffic may be transmitted via a PDU session established through a single 3GPP access.

In the dual steering related example described earlier, it is assumed that the UE has a single subscription. According to prior arts, the UE registers with only one 5G CN for the 3GPP access. Furthermore, prior arts do not define a method for providing services to the UE through two 3GPP accesses.

However, the UE may need to register with two 5G CNs to receive services via two 3GPP accesses. Furthermore, to receive services via two 3GPP accesses, the UE may also need to perform separate registration procedures for each 3GPP access with a single 5G CN.

Furthermore, if the UE registers with two 5G CNs, it may require selection and/or determination of which 5G CN to establish a PDU session with for a given service and which 5G CN to transmit traffic to.

To achieve this, UEs must perform registration using two 3GPP RATs simultaneously within a single network (PLMN or SNPN). Alternatively, the UE must perform registration simultaneously on different networks for each 3GPP RAT (both networks being PLMN, both networks being SNPN, or one network being PLMN and the other being SNPN). Furthermore, 3GPP RAT must support various configurations such as NR+NR, NR+E-UTRA, TN-NTN, and NTN-NTN.

The DualSteer item defined use cases and service requirements for providing services to terminals by simultaneously using two 3GPP accesses in 5GS (TR 22.841 "Study on Upper layer traffic steer, switch and split over dual 3GPP access"). Conventionally, a UE with a single subscription registered with only one 5G CN for the 3GPP access. However, the UE may need to register with two 5G CNs to receive services over two 3GPP accesses. Furthermore, to receive services over two 3GPP accesses, the UE may need to register separately with each of the two 3GPP accesses within a single 5G CN.

Meanwhile, 5GC manages terminal registration separately for each access. Therefore, if a terminal performs registration through one 3GPP access and then attempts registration again through another 3GPP access, it is problematic that the registration initially performed through the 3GPP access cannot be maintained.

Consequently, a method is required to resolve this issue for a single terminal to access services through two 3GPP accesses.

Additionally, Dual Steer across two different PLMNs (e.g., HPLMN + VPLMN) must also be supported. It is also necessary to support scenarios where it is possible to provide services related to Dual Steer to the terminal even if the VPLMN, other than the HPLMN, does not support Dual Steer. If this is supported, the HPLMN operator may introduce Dual Steer services regardless of whether other operators' networks support Dual Steer, because the service becomes possible by upgrading only the HPLMN network, even if the VPLMN network does not support Dual Steer.

Dual steer, where 5GS simultaneously uses two 3GPP accesses to provide services to the terminal, is being discussed.

Meanwhile, the 5GC manages the terminal's registration separately for each access. Therefore, if a terminal performs registration via one 3GPP access and then attempts to register again via another 3GPP access, an issue arises where the UDM sends a message to the AMF to release the existing registration.

In other words, according to prior arts, the terminal cannot complete registration for two 3GPP accesses.

Various examples of the present disclosure require specific measures to support the terminal receiving dual steering services.

The various examples of the present disclosure propose methods for supporting NSSRG when a UE performs dual 3GPP registration. For reference, the methods of the present disclosure may be applied in the same manner even when the UE registers with different PLMNs in 3GPP access and non-3GPP access.

The approach for supporting registration in dual 3GPP access according to various examples of the present disclosure comprises a combination of one or more of the operations/configurations/steps described below.

In this specification, the terms "UE" (User Equipment) and "terminal" may be used interchangeably.

In the present disclosure, the terms "Subscriber" and 'User' may be used interchangeably.

In the present disclosure, the terms "Application Function (AF)" and "Application Server (AS)" may be used interchangeably.

The methods presented below may be performed or used in combination or as complementary measures.

In the following description, PLMN may be interpreted as SNPN, Equivalent PLMN, etc., and SNPN may be interpreted as PLMN.

### 1. First Example of the Present Disclosure

The first example of the present disclosure includes an example of Dual 3GPP Access Registration.

The examples of the present disclosure include operation based on the use of two 3GPP accesses, but these are merely examples. The scope of the present disclosure is equally applicable to registration using two non-3GPP accesses.

According to prior arts, when a terminal performs registration to another network while already registered in one network, the new AMF performs Nudm _UECM_Registration to the UDM. Upon receiving Nudm_UECM_Registration, the UDM sends Nudm_UECM_DeregistrationNotification to the old AMF.

Upon receiving Nudm_UECM_DeregistrationNotification, the old AMF may delete the terminal's context. Additionally, if the terminal has a PDU session, the old AMF requests release of the PDU session.

Therefore, to support dual registration, the operation of prior arts must be prevented from occurring.

To address these issues, in the first example of the present disclosure, the terminal may transmit a registration request message including information indicating that the terminal is performing dual registration while performing registration. The information indicating that the terminal is performing dual registration may be, for example, a new registration type or a separate indication. For reference, the information indicating that the terminal is performing dual registration may also be expressed as information related to dual registration.

However, the term "dual registration" here is merely an example. The scope of the present disclosure is not limited by the term "dual registration." For example, other names (e.g., additional registration, second registration, addition of the second 3GPP access, etc.) may be used instead of the designation "dual registration.".

The AMF may receive information that a terminal is performing dual registration. The AMF may notify the UDM that the terminal is performing dual registration while performing Nudm_UECM_Registration. For example, the AMF may transmit a Nudm _UECM _Registration-related message including information related to dual registration to the UDM.

Based on that the terminal is performing dual registration, the UDM may not transmit a Nudm _UECM _DeregistrationNotification to the old AMF. For example, based on receiving information that the terminal is performing dual registration, the UDM may decide not to send a Nudm_UECM_DeregistrationNotification to the old AMF.

For example, when performing the registration procedure for a single network, the terminal may follow conventional operation. That is, when transmitting a registration request message for the first network, information related to dual registration may not be included. When the terminal performs registration for dual registration with another network, the terminal may include information indicating that it is performing dual registration in the registration request message.

When a terminal performs a registration procedure due to mobility or performs a periodic registration procedure, the terminal also transmits information indicating that it is performing dual registration.

The information, transmitted by the terminal, indicating the terminal is performing dual registration may be stored by the UDM via the AMF. The UDM may store and manage both the AMF/network where the terminal is registered without dual registration information and the AMF/network where the terminal is registered with dual registration information.

The terminal may also perform the registration procedure via mobility. In this case, the modified AMF can perform Nudm_UECM_Registration to the UDM. At this time, based on information related to dual registration, the UDM may determine to which network to transmit the Nudm_UECM_DeregistrationNotification.

For example, in PLMN1, the terminal may perform registration according to the conventional procedure. In PLMN2, the terminal may transmit a registration request message including dual registration information and perform registration. In this case, since the Nudm_UECM_Registration message sent by PLMN2's AMF includes dual registration information, the UDM transmits a Nudm _UECM_DeregistrationNotification to the old AMF stored in PLMN2 along with the dual registration information. For example, this terminal may have performed the registration procedure for AMF 1 in PLMN1 and then performed dual registration for AMF2 in PLMN2. If, due to the terminal's mobility, the serving AMF in PLMN2 changes from AMF2 to AMF3, the new AMF, AMF3, performs Nudm_UECM_Registration to the UDM. The UDM then performs deregistration for AMF2 by sending a notification to the old AMF, AMF2. Furthermore, the UDM does not send a Nudm_UECM _DeregistrationNotification to the AMF in PLMN1. This is because deregistration should not be performed for the AMF in PLMN1.

The terminal's access type may also be considered. A terminal performing dual registration in a 3GPP access does not affect registration in a non-3GPP access.

The AMF may request Authentication from the AUSF for terminal authentication. When performing the Authentication request, the AMF may inform the AUSF that the terminal has requested dual registration.

Subsequently, if the AUSF successfully authenticates the terminal, the AUSF may inform the UDM of the terminal's authentication result. At this time, based on the dual registration request information provided by the AMF, the AUSF may also inform the UDM that the terminal performed authentication during the dual registration process.

When the AMF performs Nudm_UECM _Registration for the UDM, the UDM may decide whether to accept the Nudm_UECM_Registration. For example, the UDM may decide whether to accept the AMF's request based on information transmitted by the AUSF (e.g., information indicating that authentication was performed during the dual registration process).

The AMF may send a Registration Accept message including information related to whether dual registration was successful to the terminal.

To support the terminal performing dual registration through two networks (HPLMN + VPLMN), dual registration may be supported solely through HPLMN support, even if VPLMN does not support dual registration. For example, the terminal may determine that VPLMN does not support dual registration based on the following (determination possible based on one or a combination of the following):
- When the terminal sends a registration request message that includes information related to dual registration with the VPLMN, but the registration Accept message received by the terminal does not include information related to whether dual registration was successful; and/or
- When the 5GS network feature support included in the Registration Accept message received by the terminal includes information indicating that dual registration support is not supported, or when the message does not include information related to dual registration support.

If at least one of the above two cases applies, the terminal may perform the registration procedure for dual registration with another network (e.g., HPLMN). After receiving the registration request message, the AMF may perform Nudm_UECM_Registration and notify the UDM that the terminal is performing dual registration.

Then, the UDM may recognize that the terminal has performed dual registration. The UDM may receive a Nudm_UECM _Registration request for the same terminal from the AMF of another network (e.g., VPLMN). In this case, the UDM may not send a Nudm_UECM_DeregistrationNotification to the network (e.g., HPLMN) where dual registration is performed.

Based on this operation, even if the VPLMN does not support dual registration, the UE's dual registration may be supported.

In the previously described example, the UE performed the registration procedure to the VPLMN and then performed the registration procedure to the HPLMN. However, the opposite sequence or two registration procedures to the VPLMN may also occur. For example, after registering via the visited network, the UE may perform another registration based on 3GPP access via the visited network.

After performing dual registration with the HPLMN, the terminal may register with a VPLMN that does not support dual registration. In this case, if the UE is authorized to perform dual registration, the UDM may delay sending the Nudm_UECM_DeregistrationNotification to the HPLMN's old AMF based on a timer. This operation may also be performed based on the UDM's local policy/configuration.

Before the timer expires, if the UE performs a registration procedure for dual registration to another network (e.g., HPLMN), the UDM may stop the timer. If the timer expires, the registration procedure for dual registration to another network (e.g., HPLMN) has not been performed, the UDM may send a Nudm_UECM_DeregistrationNotification to the old AMF of the HPLMN.

The old AMF of the HPLMN can receive a Namf_Communication_RegistrationStatusUpdate from the AMF of another PLMN. If the UE is authorized to perform dual registration, the old AMF of the HPLMN may not perform the task of cleaning up the terminal's PDU Session for a certain period of time based on a timer. This operation may be performed based on the AMF's local policy/configuration. Subsequently, when the terminal performs the registration procedure for dual registration, the old AMF of the HPLMN may stop the timer and maintain the terminal's context, thereby preventing service interruption for the terminal.

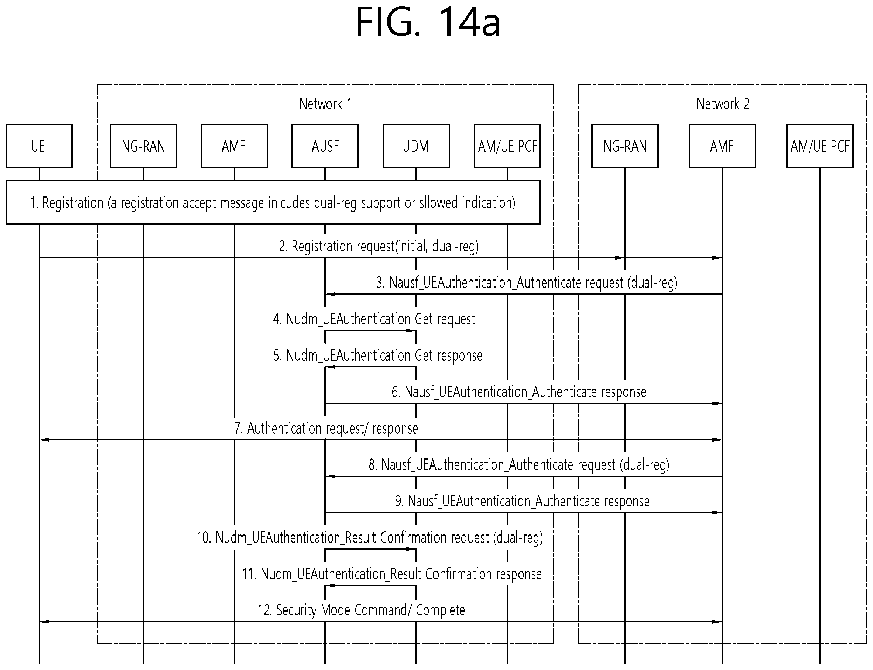

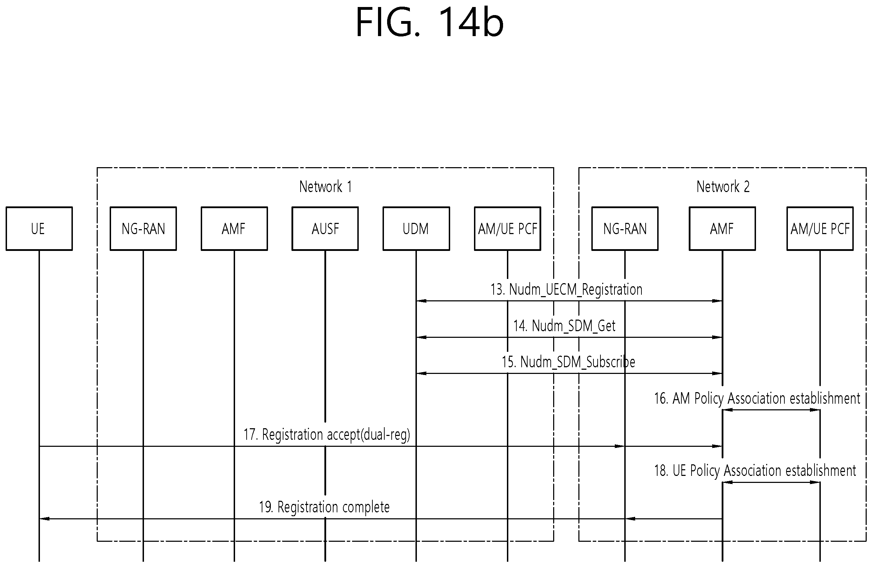

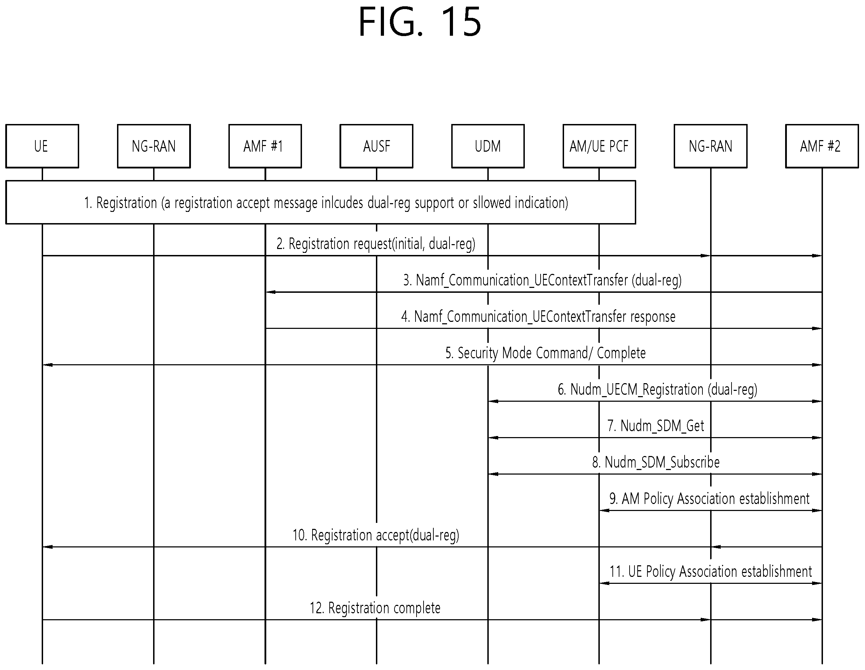

Hereinafter, with reference to FIGS. 14a, 14b, and 15, the first and second examples of the procedure according to the first example of the present disclosure shall be described.

The following figures are provided to illustrate specific examples of the present disclosure. The names of specific devices, signals, messages, or fields shown in the figures are provided merely as examples; the technical features of the present disclosure are not limited to the specific names used in the following figures.

**Fig. 14a** **and** **Fig. 14b** **are the first example of the procedure according to the first example of the present disclosure.**

The first example as illustrated in FIGS. 14a and 14b, describes operation based on different networks (e.g., PLMN + PLMN, PLMN + SNPN, SNPN + SNPN).

In the examples of FIGS. 14a and 14b, descriptions of operations identical to the prior arts are omitted, focusing primarily on the matters proposed in the present disclosure.

Referring to FIGS. 14a and 14b, an example is shown where a UE performs dual registration via different networks.
1. The terminal may perform the registration procedure in PLMN1.

For example, the UE may initiate the registration procedure by sending a registration request message to the AMF. The terminal may send a Registration Request message that includes UE MM Core Network Capability. The terminal can inform the AMF of its dual registration support capability via the UE MM Core Network Capability. Upon receiving this information, the AMF may send a registration acceptance message to the terminal, including the 5GS network feature support related to dual registration. By transmitting the 5GS network feature support, the AMF can inform the terminal whether the network supports dual registration.

At this time, based on subscriber information obtained from the UDM and the operator policy configuration in the AMF, the AMF may also inform the terminal whether it supports the 5GS network feature support related to dual registration, but only if dual registration is permitted for the terminal.

Alternatively, the 5GS network feature support may only include the capability indicating whether the network supports dual registration. The AMF may inform the terminal whether dual registration is permitted through a separate indication, in addition to the 5GS network feature support.

2. The terminal may transmit a registration request message in PLMN2. The registration request message may be a registration request message for initial registration.

For example, the terminal performs registration in PLMN2. At this time, the terminal may send a registration request message including an indication indicating the dual registration or a new registration type indicating the dual registration.

During this process, as in step 1, an operation exchanging capabilities between the terminal and the network may be performed.

3. The AMF in PLMN2 may perform authentication for the terminal. The AMF may request authentication from the AUSF while informing the AUSF that the terminal has requested dual registration.

For example, the AMF may send an authentication request message including information related to dual registration to the AUSF.

4-9. EAP authentication may be performed according to conventional procedures. For reference, steps 3 through 7 illustrate the authentication process for the terminal. Steps 8 through 9 illustrate the process by which the AMF notifies the AUSF that authentication for the terminal has succeeded. For example, the AUSF may send authentication-related request messages to the UDM and receive response messages from the UDM. The AUSF may send authentication response messages to the AMF. The AMF may exchange authentication request/response messages related to EAP authentication with the UE. The AMF may send authentication request messages related to dual registration to the AUSF and receive response messages from the AUSF.

10-11. The AUSF may notify the UDM that authentication for the terminal has succeeded. For example, the AUSF may send a request message including information related to the authentication result to the UDM. This request message may include information that the terminal has requested dual registration. Additionally, this request message may include information that the terminal's authentication has succeeded, information related to the time the authentication succeeded, the serving network name, and information indicating that dual registration was requested. The AUSF may inform the UDM that the terminal has requested dual registration. The UDM may send a response message to the AUSF.

12. The AMF may notify the terminal that authentication has been successfully completed by sending a Security Mode Command. The terminal responds to the Security Mode Command by transmitting a Security Mode Complete to the AMF.

13. The AMF sends a Nudm_UECM_ Registration to the UDM. At this time, the AMF may also indicate that the terminal has requested dual registration. For example, the AMF may send a message that includes information related to dual registration to the UDM.

The UDM may determine whether to allow dual registration for the terminal. For example, the UDM may consider the information sent by the AUSF in step 10 (information that the terminal's authentication has succeeded, the time of success, the serving network name, and information indicating that dual registration was requested).

For example, if the UDM receives information from the AUSF that the terminal's authentication succeeded without a request for dual registration, the UDM may transmit an error to the AMF in response to the request.

If the UDM does not allow the dual registration for the terminal, the UDM may perform operations such as the following examples. For example, i) The UDM may return an error in response to the AMF's Nudm_UECM_Registration and may additionally transmit the reason for this. For example, ii) The UDM may process Nudm_UECM_Registration normally and send a Nudm_UECM_DeregistrationNotification to the AMF of PLMN1, where the terminal is already registered. The UDM may inform the AMF whether it permits dual registration for the terminal.

14-15. The AMF may retrieve subscriber information for the terminal from the UDM by performing Nudm_SDM_Get. To receive updates to the terminal's subscriber information (i.e., to receive information about changes to subscriber information), the AMF may perform Nudm_SDM_Subscribe. If the subscriber information for the terminal includes information permitting dual registration, the AMF may decide whether to allow the terminal's registration based on the subscriber information.

16. The AMF performs the AM Policy Association Establishment process for the terminal.

17. The AMF may transmit a Registration Accept message including information related to the dual registration to the terminal. The AMF may notify the terminal that it has been successfully performed.

18. The AMF may perform the UE Policy Association Establishment process for the terminal.

19. The UE may send a Registration Complete message if necessary.

Hereinafter, with reference to FIG. 15, a second example of the disclosure of the present disclosure is described.

The following figures are provided to illustrate specific examples of the present disclosure. The names of specific devices, signals, messages, or fields shown in the figures are provided merely as examples; the technical features of the present disclosure are not limited to the specific names used in the following figures.

**Fig. 15** **is the second example of the procedure according to the first example of the present disclosure.**

The second example based on the example in FIG. 15, describes operation based on the same network.

In the example of FIG. 15, the description of operation identical to the prior arts is omitted, and the description focuses primarily on the matters proposed in the present disclosure.
1. The terminal may perform the registration procedure in the PLMN.

For example, the UE may initiate the registration procedure by sending a registration request message to the AMF. The terminal may send a Registration Request message that includes UE MM Core Network Capability. The terminal can inform the AMF of its dual registration support capability via the UE MM Core Network Capability. Upon receiving this information, the AMF may send a registration acceptance message to the terminal, including the 5GS network feature support related to dual registration. By transmitting the 5GS network feature support, the AMF can inform the terminal whether the network supports dual registration.

At this time, based on subscriber information obtained from the UDM and the operator policy configuration in the AMF, the AMF may also inform the terminal whether it supports the 5GS network feature support related to dual registration, but only if dual registration is permitted for the terminal.

Alternatively, the 5GS network feature support may only include the capability indicating whether the network supports dual registration. The AMF may inform the terminal whether dual registration is permitted through a separate indication, in addition to the 5GS network feature support.

2. The terminal performs registration with the PLMN where registration was performed in step 1. For example, the terminal may transmit a registration request message. The registration request message may be a registration request message for initial registration.

At this point, the terminal may transmit a registration request message that includes an indication indicating dual registration or a new registration type indicating the dual registration. During this process, an operation exchanging capabilities between the terminal and the network may be performed, similar to step 1.

The terminal may send a registration request message including the 5G-GUTI assigned in step 1.

NG-RAN performs AMF selection based on the S-TMSI included in the terminal's AS signaling / RRC message. If an interface exists between AMF1 and NG-RAN, the same AMF may be selected. Even if the same AMF is selected, different AMFs may be newly selected due to operations like cell selection/reselection or handover within each access network. To handle such cases, the AMF can create and manage separate contexts for each registration.

3-4. AMF2 may perform a procedure to retrieve the terminal's context from the terminal's current serving AMF (i.e., AMF1) based on the 5G-GUTI transmitted by the terminal. For example, AMF2 may send a message to AMF1 that includes information indicating that the terminal is performing the dual registration. Upon receiving this, AMF1 may recognize that the terminal is performing the dual registration. Based on recognizing the dual registration, AMF1 may not start a timer to delete the terminal's context. This process may be omitted if there is no interface between AMF2 and AMF1, or if the operator configuration is set not to retrieve the UE context during dual registration.

5. AMF2 can perform the authentication process with the terminal. Based on the UE context obtained from AMF1, AMF2 may reuse the security context within the UE context without performing an authentication process. Regardless of whether the security context is reused, the terminal can manage the security contexts used in the first registration and second registration separately, as described in step 2.

6. AMF2 sends Nudm_UECM_Registration to UDM. At this time, AMF2 may also indicate that the terminal has requested dual registration. Based on this, UDM may decide not to transmit Nudm_UECM _DeregistrationNotification to AMF1.

7-8. The AMF may retrieve subscriber information for the terminal from the UDM by performing Nudm_SDM_Get. To receive updates to the terminal's subscriber information (i.e., to receive information about changes to subscriber information), the AMF may perform Nudm _SDM _Subscribe. If the subscriber information for the terminal includes information indicating whether dual registration is permitted, the AMF may determine whether to allow the terminal's registration based on the subscriber information.

9. AMF2 performs the AM Policy Association Establishment process for the terminal. If information related to the AM Policy Association received from AMF1 is available, AMF1 selects the same PCF based on this information.

For reference, previously this process was performed optionally based on AMF2's decision. However, according to the first example of the present disclosure, when performing the dual registration, AMF2 may select the same AM PCF. By selecting the same AM PCF, AMF2 enables the AM PCF to transmit different RFSP Indexes to each respective AMF. Consequently, the same RAT may not be selected in each 3GPP access.

10. AMF2 may send a Registration Accept message including dual registration related information to the terminal. AMF may notify the terminal that the process was successfully completed.

11. AMF2 performs the UE Policy Association Establishment process for the terminal. If information related to the UE Policy Association received from AMF1 is available, AMF2 selects the same PCF based on this information. Previously, this process was optional and performed at AMF2's discretion, but when performing dual registration, it may be mandated that the same UE PCF be selected.

12. The UE transmits a Registration Complete message if necessary.

### 2. Second Example of the Present Disclosure

The second example of the present disclosure includes an example where the AMF manages the UE contest.

The AMF may manage the UE context for each registration on each 3GPP access. To do this, the AMF may store and manage the UE context for each 3GPP access. For example, the AMF may store and manage the 5G-GUTI, RAN UE NGAP ID, AMF NGAP ID, etc., for each 3GPP access.

The terminal may perform mobility registration in each 3GPP access according to its conventional operation. During the first registration procedure, the terminal may leave the Registration Area received from the network. In this case, while performing mobility registration, the terminal may not transmit information indicating dual registration to the network. During the second registration procedure, the terminal may leave the Registration Area received from the network. In this case, the terminal transmits a Registration Request message that includes information indicating dual registration while performing the mobility registration. Additionally, when performing the mobility registration, the terminal must include the 5G-GUTI assigned by each 3GPP access.

When the terminal performs such an action, the new AMF may perform the following operations. For example, the new AMF may request the old AMF to transmit the UE context. In this case, if the new AMF receives dual registration information, the AMF may transmit a request message including the dual registration information (or the 5G-GUTI assigned by the respective access network) to the old AMF. This allows the old AMF to determine whether to send the UE context for the first registration or the UE context for the second registration when the old AMF transmits the UE context to the new AMF. For example, if the new AMF transmits the dual registration information (or the 5G-GUTI assigned by the respective access network) to the old AMF, the old AMF forwards the UE context of the registered UE to the new AMF based on the registration request message that includes the dual registration indication. Conversely, if the New AMF did not send dual registration information, the old AMF forwards the UE context of the UE, that registered based on the registration request message that does not include the dual registration indication, to the old AMF.

Additionally, if dual registration information exists, the new AMF may send a Nudm_UECM_Registration that includes the dual registration information to the UDM. Based on this, the UDM may determine which AMF to send the Nudm_UECM_DeregistrationNotification to.

For example, if an AMF performed a Nudm_UECM_Registration without including dual registration information, the UDM transmits the Nudm_UECM_DeregistrationNotification to the old AMF that performed the Nudm_UECM_Registration without dual registration information. Furthermore, if the AMF performed Nudm_UECM_Registration by including dual registration information, the UDM transmits the Nudm_UECM_DeregistrationNotification to the old AMF that performed Nudm_UECM_Registration with dual registration information.

Alternatively, the terminal or AMF may assign an ID that distinguishes each 3GPP access. Based on the assigned ID, the terminal or AMF may also indicate which context a request/update pertains to.

### 3. The Third Example of the Present Disclosure

Example 3 of the disclosure in the specification includes an example where a terminal performs dual registration using different NG-RAN resources.

When transmitting data using two 3GPP accesses, the network may not want the terminal to use the same NG-RAN resource. For example, the network might want to use dual 3GPP access to perform duplication and increase reliability. In this case, using the same NG-RAN resource creates dependency between each 3GPP path, making it difficult to effectively improve reliability. Furthermore, the network may have a priority or preference for each 3GPP access and may only wish to use the other 3GPP access when service is difficult via the preferred one. In such cases, the two 3GPP accesses must not use the same NG-RAN resource. To achieve this, the following methods can be employed.

### [3-1] Example Based on RFSP Index

During the registration process using two 3GPP accesses, the terminal may be configured to select the same AM-PCF (Access and Mobility Policy Control Function). In this case, the AM-PCF may transmit different RFSP (Radio Frequency Selection Priority) Indexes to the terminal for each registration. To achieve this, information related to the PCF may be stored in the subscriber information within the UDM. Alternatively, the AM-PCF selected by the AMF during the first registration may be stored in the UDM.

In the case of roaming, there is no interface between the V-AM-PCF and H-AM-PCF, but this interface may need to be supported. To achieve this, during the process where the terminal registers with the AMF in the visited network, the terminal can send a registration request message to the AMF that includes information related to dual registration. This information is forwarded to the V-AM-PCF. Recognizing the dual registration, the V-AM-PCF may establish an association with the H-AM-PCF. At this time, the AMF may forward the H-AM-PCF information to the V-AM-PCF. If the V-AM-PCF has H-AM-PCF information, it may establish an association between the V-AM-PCF and H-AM-PCF regardless of the dual registration information. Additionally, a Proxy-PCF or Intermediate-PCF can be deployed at the network border to connect the AM-PCF of one network with the AM-PCF of another network. AM-PCFs belonging to different networks may also communicate via a Proxy-PCF or Intermediate-PCF. For example, a path such as H-AM-PCF <-> H-Proxy-PCF <-> V-Proxy-PCF <-> V-AM-PCF may be used.

Additionally, the AM-PCF may consider the currently used service when determining the RFSP Index. This can utilize the procedure described in clause 4.16.14.2 of TS 23.502 V18.2.0. Based on this, the AM-PCF may determine the RFSP Index according to the service currently being used by the terminal. Furthermore, by updating the conventional procedure, the SM PCF may transmit information related to the steering policy used in PDU Sessions established using dual 3GPP access (e.g., steering mode information) to the AM PCF. The AM PCF can then determine the RFSP Index with reference to this information.

### [3-2] Example Based on UDM Subscription

In this case, the UDM may configure information such as the RFSP Index or Service Area Restriction, RAT restriction, etc., differently for each, and transmit it to the AMF. Based on this, each 3GPP access uses different regions / RATs / NG-RAN resources. To achieve this, the UDM may remember the subscription information transmitted to each AMF. Consequently, when a terminal no longer uses dual registration, the UDM may push down the updated subscription information.

### 4. The Fourth Example of the Present disclosure

The fourth example of the present disclosure includes an example supporting non-3GPP access.

A terminal may perform registration for non-3GPP access while being dual registered in 3GPP access. At this time, the terminal has two 5G-GUTIs used in 3GPP because it is dual registered in 3GPP access.

According to the prior arts, when the terminal performs registration with the non-3GPP access, it must include the 5G-GUTI assigned by the 3GPP access in the registration request message. A problem exists where, if the terminal is dual registered with 3GPP access within the same network, it cannot determine which 5G-GUTI to include.

To inform the terminal which 5G-GUTI information to use, the AMF may perform the following operations. For example, the AMF may assign a 5G-GUTI in the 3GPP access to a terminal supporting dual registration. In this case, the AMF may send a Registration Accept message including the primary 5G-GUTI information to the terminal. For example, the AMF may include the 5G-GUTI in the Registration Accept message and inform the terminal whether it is the primary 5G-GUTI or secondary 5G-GUTI based on a separate IE (or it may only inform the terminal of the primary 5G-GUTI).

Based on information related to 5G-GUTI, the terminal transmits a Registration Request that includes the 5G-GUTI configured as primary in non-3GPP access.

The AMFs may differ from each other. For example, the AMF responsible for each 3GPP access may be different. In this case, since different AMFs independently assign GUTIs, a problem may arise where both AMFs assign a primary GUTI. Therefore, when the AMF differs, a method is needed to assign the primary 5G-GUTI/secondary 5G-GUTI. For example, the UDM may be requested to store information about the 5G-GUTI assigned by the AMF and/or information indicating that a primary 5G-GUTI has been assigned. The stored information may then be transmitted by the UDM to other AMFs in the form of subscription data.

For example, based on subscription information, the AMF may notify the terminal of the secondary 5G-GUTI when the second registration procedure is performed.

In another example, if the terminal transmits a registration request message including dual registration information, the terminal may consider the 5G-GUTI received by the terminal during that registration procedure as the secondary 5G-GUTI. That is, the 5G-GUTI assigned while performing registration without dual registration information can be configured as the primary 5G-GUTI.

Another example is that the terminal may consider the 5G-GUTI received during the first registration procedure or a preceding registration procedure as the primary 5G-GUTI.

Another example is that the terminal may consider the most recently received 5G-GUTI as the primary 5G-GUTI.

Based on the various examples described above, when a terminal performs registration via non-3GPP access, the terminal may use the security context associated with the selected 5G-GUTI.

The operation according to the fourth example of the present disclosure may only apply when the terminal uses the same PLMN in both 3GPP access and non-3GPP access.

In 3GPP access, a terminal may register through different networks. In this case, when registering in non-3GPP access, the terminal may select a 5G-GUTI assigned in the same PLMN as the network the terminal wishes to register with in non-3GPP access, regardless of the primary 5G GUTI.

### 5. The Fifth Example of the Present Disclosure

The fifth example of the present disclosure includes an example where different AMFs are used for each 3GPP access when dual registration is supported on the same network.

When a terminal performs dual 3GPP registration within the same network or an equivalent network, it is assumed that the fifth example of the present disclosure is used. However, the scope of the present disclosure is not limited thereto. For example, the fifth example of the present disclosure may also apply when performing dual 3GPP registration across different networks.

### [5-1] Operation Based on the Core Network

This method ensures that when a terminal performs dual registration within the same network, it always uses different serving AMFs. Specifically, after the terminal registering on one 3GPP access, the terminal may register on another 3GPP access. If the RAN selects the same AMF for registration, the AMF may redirect the Registration Request message to a different AMF. Based on this redirection, the terminal may always be registered with two distinct AMFs.

If, due to terminal mobility, different AMFs serve the terminal and then a single AMF may serve the terminal again (e.g., during a handover process or when AMF reselection occurs due to terminal idle mode mobility). In this case, the AMF may relocate the serving AMF of one 3GPP access. Furthermore, when a terminal performs mobility registration, the terminal may transmit a registration request message including information such as the GUTI assigned by the AMF of each 3GPP access. Furthermore, according to the prior arts, a terminal can currently perform only one registration at a time; however, in the case of dual registration, this constraint can be removed. That is, in the case of mobility registration, the terminal may perform registrations in parallel.

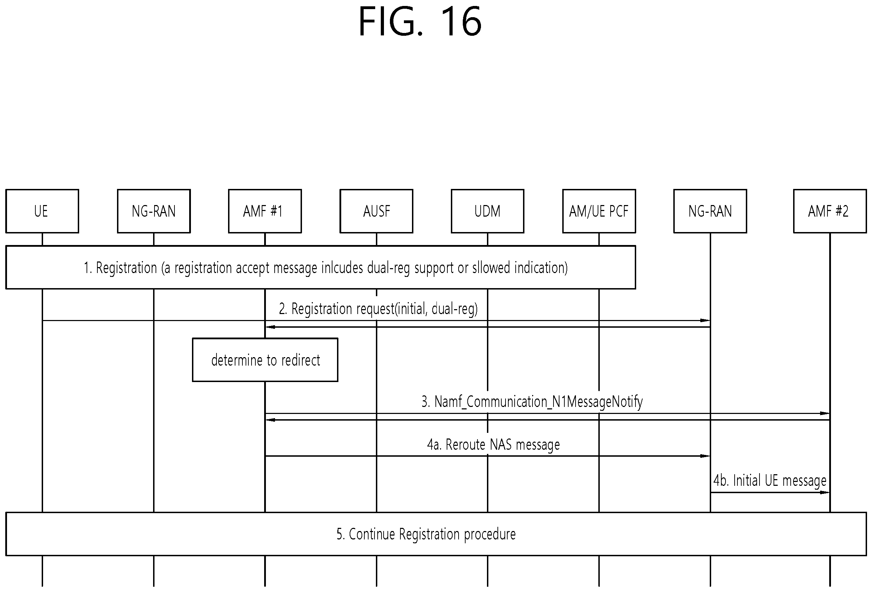

Referring to the example in FIG. 16, the first example of the procedure according to the fifth example of the disclosure of the present disclosure based on [5-1] is described.

The following figures are provided to illustrate specific examples of the present disclosure. The names of specific devices, signals, messages, or fields shown in the figures are provided merely as examples; the technical features of the present disclosure are not limited to the specific names used in the following figures.

**FIG. 16** **is an example of a first procedure according to the fifth example of the present disclosure.**

Referring to FIG. 16, an example is described where the AMF performs redirection when dual registration is performed within the same network.

Referring to FIG. 16, an example is described where, when a terminal performs dual registration through the same network, a different AMF is always selected based on AMF redirection.
1. This may be performed in the same manner as step 1 in FIG. 15.
2. The terminal performs registration with the PLMN where registration was performed in step 1. For example, the terminal may transmit a registration request message. The registration request message may be a registration request message for initial registration.

At this point, the terminal may transmit a registration request message that includes an indication indicating dual registration or a new registration type indicating the dual registration. During this process, an operation exchanging capabilities between the terminal and the network may be performed, similar to step 1.

The terminal may send a registration request message including the 5G-GUTI assigned in step 1.

The NG-RAN performs AMF selection based on the S-TMSI included in the AS signaling / RRC message by the terminal. If an interface exists between NG-RAN and AMF1, the same AMF may be selected.

To ensure a different AMF is selected than AMF1, the terminal may transmit AS signaling/RRC messages without including GUAMI or S-TMSI in the AS signaling/RRC messages.

Based on the UE Context for the terminal, 5G-GUTI, and information that the terminal is performing dual registration stored by AMF#1, AMF#1 may recognize that this the registration the second registration for the same terminal. AMF#1 may decide to redirect to another AMF.

Depending on whether an interface exists between AMF#1 and the Target AMF, either step 3 or steps 4a and 4b may be performed.

3. When AMF#1 decides to redirect to another AMF, AMF#1 selects the target AMF (AMF#2 in this example). This AMF selection may be based on terminal capability, AMF capability, slice information, and information related to dual registration being performed. If an interface exists between the target AMF and AMF#1, AMF#1 may use Namf_CommunicationN1MessageNotify to forward the terminal's Registration Request message to the target AMF. During this process, AMF#1 may transmit information indicating that the terminal is performing dual registration to AMF#2.

If there is no interface between AMF#1 and the Target AMF, AMF#1 may perform redirection via NG-RAN, in which case steps 4a and 4b are executed.

4a. AMF#1 transmits a Reroute NAS Request message to the target AMF. To identify the target AMF, AMF#1 may include both the AMF Set ID and the AMF Pointer in this message.

For example, the AMF may select a target AMF either through the NRF or based on local configuration. To support target AMF selection via the NRF, AMF#1 may perform a Register on the NRF and indicate whether it supports dual registration. Additionally, when performing discovery through the NRF, the AMF may indicate that it is performing AMF discovery for dual registration. In this case, the NRF selects the target AMF instance and may notify AMF#1 of the selected target AMF instance. That is, it may notify the AMF Pointer. Furthermore, AMF#1 may notify the Target AMF via a Reroute NAS Request message, adding information indicating that the terminal is performing dual registration within the Source to Target AMF Information Reroute IE.

4b. NG-RAN sends a message to the target AMF based on the target AMF information transmitted by AMF#1.

### 5. AMF#2 performs the remaining registration procedures.

### [5-2] RAN-based Operation

When a terminal performs registration, it may include information in the AS signaling/RRC message indicating it is performing dual registration, along with GUAMI and S-TMSI. Alternatively, instead of indicating dual registration, the information may include instructions for the NG-RAN to select an AMF different from the terminal's serving AMF (the AMF identifiable by GUAMI and S-TMSI).

Upon receiving the relevant information from the terminal, the NG-RAN may perform AMF selection. The NG-RAN may select an AMF other than the one discoverable based on the GUAMI and S-TMSI transmitted by the terminal. Based on the NG-RAN's selection, the AMF chosen during the first registration may differ from the AMF chosen during the second registration.

In another example, when performing the second registration, the terminal may transmit a Registration Request without including the GUAMI and S-TMSI information received during the first registration within the AS signaling / RRC message. In this case, since there is no information about the AMF selected during the first registration, a new AMF may be selected during the second registration, or the same AMF may be selected. If the same AMF is selected, redirection to another AMF may be performed based on the operation described in Example [5-1].

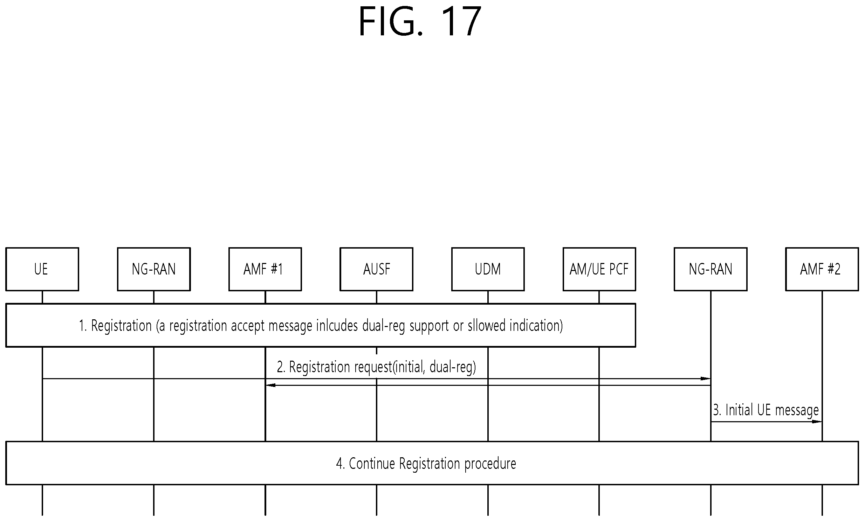

Referring to the example in FIG. 17, the second example of the procedure according to the fifth example of the present disclosure based on [5-2] is described.

The following figures are provided to illustrate specific examples of the present disclosure. The names of specific devices, signals, messages, or fields shown in the figures are provided merely as examples; the technical features of the present disclosure are not limited to the specific names used in the following figures.

**FIG. 17** **is an example of a second procedure according to the fifth example of the present disclosure.**

FIG. 17 illustrates an example where the NR-RAN selects an AMF when dual registration is performed on the same network. The NG-RAN may select a different AMF.
1. This can be performed in the same manner as step 1 in FIG. 15.
2. The terminal performs registration with the PLMN where registration was performed in step 1. For example, the terminal may transmit a registration request message. The registration request message may be a registration request message for initial registration.

At this point, the terminal may transmit a registration request message that includes an indication indicating dual registration or a new registration type indicating the dual registration. During this process, an operation exchanging capabilities between the terminal and the network may be performed, similar to step 1.

At this point, the terminal may include the 5G-GUTI assigned in step 1 in the Registration Request message and transmit a Registration Request message. The terminal may include information indicating the terminal is performing dual registration within the AS signaling / RRC message and transmit the AS signaling / RRC message along with the 5G-GUTI and S-TMSI. Upon receiving this, the NG-RAN selects an AMF (e.g., AMF#2) different from the AMF selected by the GUAMI and S-TMSI (e.g., AMF#1).

3. The NG-RAN sends the Registration Request message to the selected AMF. During this process, information indicating that the terminal is performing dual registration may be sent to the AMF via AS signaling / RRC messages.

4. AMF#2 performs the remaining registration procedures.

6. The Sixth Example of the Present Disclosure

According to the sixth example of the present disclosure, when dual registration is supported on the same network, the same AMF may always be used for each 3GPP access.

For example, when performing dual registration on the same network, the same serving AMF may always be used.

To achieve this, when a terminal performs registration using a different 3GPP access after having performed registration on one 3GPP access, the terminal may include the 5G-GUTI assigned by the other 3GPP access in the Registration Request message. By including the 5G-GUTI assigned by the other 3GPP access, the network can be made to use the same AMF.

Additionally, by including the GUAMI or S-TMSI in the AS signaling / RRC message, the terminal may cause the base station to select the same AMF. If an N2 connection is unavailable, preventing the use of the same AMF, one AMF may act as a relay node to forward signaling intended for the other AMF.

For reference, the first to sixth examples of the present disclosure described above may be applied independently or in combination with one or more other examples.

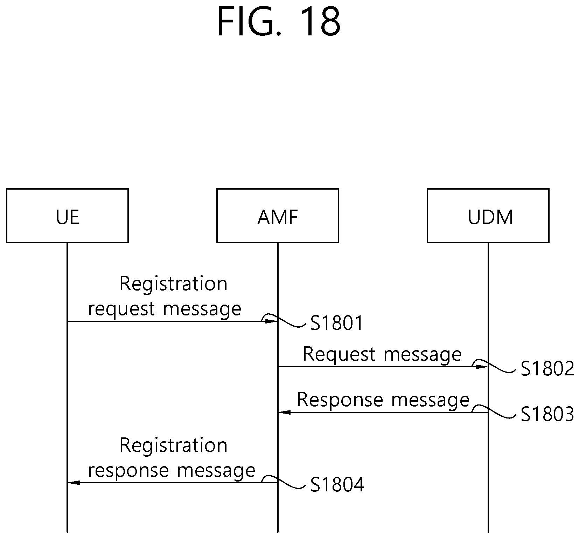

Hereinafter, with reference to FIG. 18, an example of operations according to an embodiment of the present disclosure is described. The example in FIG. 18 may include operations based on an example comprising at least one of the first to sixth examples of the present disclosure.

The following figures are provided to illustrate specific examples of the present disclosure. The names of specific devices, signals, messages, or fields shown in the figures are provided merely as examples; the technical features of the present disclosure are not limited to the specific names used in the following figures.

**FIG. 18** **illustrates examples of operations according to an embodiment of the present disclosure.**

For reference, the procedure shown in FIG. 18 is merely an example, and the scope of the present disclosure is not limited by the example in FIG. 18.

For example, with respect to the example in FIG. 18, the operation described in the examples in FIGS. 1 through 17 may also be applied. For example, even operations or contents not directly described in the example of FIG. 18 may be applied from the various examples described in the present disclosure.

The operations illustrated in FIG. 18 are merely examples, and the scope of the present disclosure is not limited to the operations illustrated in FIG. 18.

In step S1801, the UE may transmit a registration request message to the AMF.

The registration request message may include information related to dual registration.

For example, the UE may receive capability information from one or more AMFs, including the AMF. Based on the capability information received from one or more AMFs, the UE may determine whether to transmit a registration request message including information related to dual registration to which AMF.

For example, the AMF may send an authentication request message to the AUSF requesting authentication for the UE. The authentication request message may include information related to dual registration. The AMF may receive an authentication response message from the AUSF.

For example, if the AUSF's authentication of the UE is successful, based on information related to dual registration, the AUSF may transmit information that the UE has requested dual registration to the UDM.

For example, when the AMF receives an authentication response message, the AMF may transmit a security mode command message to the UE. The AMF may receive a security mode completion message from the UE.

For example, the registration request message may be a message based on mobility registration. In this case, the AMF may send a request message requesting the UE context to the other AMF. This request message may include information related to dual registration.

In step S1802, the AMF may transmit a request message to the UDM. For example, the request message may be a registration message related to the UDM.

The request message (or registration message) may include information related to dual registration.

For example, prior to performing step S1802, the UDM may receive a first request message (or first registration message) from another AMF, the first AMF. The AMF in step S1802 may also be referred to as the second AMF, and the request message (or registration message) in step S1802 may also be referred to as the second registration message.

For example, the information related to dual registration may prevent the UDM from sending a deregistration message to another AMF associated with the UE (e.g., the first AMF) if the UDM permits the dual registration.

For example, the UDM may determine whether to permit dual registration.

For instance, prior to performing step S1802, the UDM may receive, from the AUSF, a request message including information related to authentication for the UE, the serving network name, and information related to the dual registration. Based on the request message received from the AUSF and the registration message received from the AMF, the UDM may determine whether to permit dual registration for the UE.

In step S1803, the UDM may transmit a response message to the AMF. For example, the response message may be a response message for a registration message related to the UDM.

The response message may include information regarding whether dual registration is permitted.

For example, if the UDM does not permit the dual registration, the response message may include error information.

For example, the AMF may determine whether to allow dual registration based on information related to whether dual registration is allowed and the UE's subscriber information obtained from the UDM. For instance, even if the UDM allows dual registration, the AMF may not allow it.

For example, if the UDM does not allow the dual registration, the UDM may transmit a deregistration message to another AMF.

In step S1804, the AMF may send a registration response message to the UE. The registration response message may be, for example, a registration accept message.

For example, the registration response message may include information on whether dual registration succeeded. For instance, the registration response message may include information that dual registration succeeded.

For example, the AMF may transmit information to the UE on whether the AMF supports dual registration. For instance, information on whether the AMF supports dual registration may be included in the registration response message.

For example, the registration response message may include information indicating the primary 5G-GUTI among the multiple 5G-GUTIs assigned to the UE. For instance, after completing the dual registration, the UE may perform a registration procedure via non-3GPP access. In this case, the UE may transmit a registration request message including the primary 5G-GUTI to the non-3GPP access.

For example, the AMF may be the AMF of the VPLMN. In this case, the UE may determine whether the VPLMN supports dual registration. For example, the registration response message may not include information on whether the dual registration succeeded, or it may include information that dual registration is not supported. In this case, the UE may determine that the VPLMN does not support dual registration. If the VPLMN does not support dual registration, the UE may send a registration request message including information related to dual registration to the AMF of the HPLMN.

According to one embodiment of the present disclosure, when a terminal performs dual registration, the following operations may be performed to prevent the Nudm_UECM _DeregistrationNotification from being transmitted to the AMF managing another 3GPP access. For example, the terminal may notify the AMF that the terminal is performing dual registration, and the AMF may notify the UDM of the dual registration.

According to one embodiment of the present disclosure, the terminal may consider the dual registration capability of each network. Accordingly, the terminal may determine to which network to transmit information indicating that the terminal is performing dual registration.

According to one embodiment of the present disclosure, the terminal may perform mobility registration on each 3GPP access while performing dual registration. In this case, UE context transfer may be performed between AMFs. To transmit only the UE context for a specific 3GPP access of the terminal, the AMF may transmit information indicating dual registration when requesting the UE context, or transmit the 5G-GUTI assigned to the terminal via the specific 3GPP access.

According to one embodiment disclosed in the present disclosure, the terminal may perform registration via a non-3GPP access. In this case, the terminal may select a 5G-GUTI assigned without dual registration information from among the 5G-GUTIs assigned in the 3GPP access. The terminal may include the selected 5G-GUTI in the Registration Request message.

The present disclosure may have various effects.

For example, registration based on Dual 3GPP access may be supported.

Advantageous effects which can be obtained through specific embodiments of the present disclosure are not limited to the advantageous effects listed above. For example, there may be a variety of technical effects that a person having ordinary skill in the related art can understand and/or derive from the present disclosure. Accordingly, the specific effects of the present disclosure are not limited to those explicitly described herein, but may include various effects that may be understood or derived from the technical features of the present disclosure.

For reference, operations of terminals (e.g., UE) described in the present disclosure may be implemented by the devices of FIGS. 1 to 3 described above. For example, the terminal may be the first device 100 or second device 200 of FIG. 2. For example, operations of the terminal described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 105 or 206, and execute instructions/programs stored in one or more memories 104 or 204 to perform operations of the terminal (e.g., UE) described in the present disclosure.

Additionally, instructions for performing operations of the terminal described in the present disclosure may be stored in a non-volatile computer-readable storage medium that records them. The storage medium may be included in one or more memories 104 or 204. Instructions recorded in the storage medium may be executed by one or more processors 102 or 202 to perform operations of the terminal described in the present disclosure.

For reference, operations of network nodes (e.g., AMF, SMF, UPF, UDM, H-PCF, NEF, AF, UDR, AUSF, etc.) or base stations (e.g., NG-RAN, gNB, RAN, (R)AN, etc.) described in the present disclosure may be implemented by devices of FIGS. 1 to 3 to be described below. For example, the network node or base station may be the first device 100 or second device 200 of FIG. 2. For example, operations of the network node or base station described in the present disclosure may be processed by one or more processors 102 or 202. Operations of the terminal described in the present disclosure may be stored in one or more memories 104 or 204 in the form of instructions/programs (e.g., instruction, executable code) executable by one or more processors 102 or 202. One or more processors 102 or 202 may control one or more memories 104 or 204 and one or more transceivers 106 or 206, and execute instructions/programs stored in one or more memories 104 or 204 to perform operations of the network node or base station described in the present disclosure.

Additionally, instructions for performing operations of the network node or base station described in the present disclosure may be stored in a non-volatile (or non-transitory) computer-readable storage medium that records them. The storage medium may be included in one or more memories 104 or 204. Instructions recorded in the storage medium may be executed by one or more processors 102 or 202 to perform operations of the network node or base station described in the present disclosure.

While preferred embodiments have been described exemplarily above, the present disclosure is not limited to such specific embodiments, and may be modified, changed, or improved in various forms within the scope described in the spirit and claims of the present disclosure.

In the exemplary systems described above, methods are described based on flowcharts as a series of steps or blocks, but are not limited to the order of the described steps, and some steps may occur in different orders or simultaneously with other steps than described above. Additionally, those skilled in the art will understand that the steps shown in the flowcharts are not exclusive, and other steps may be included or one or more steps of the flowcharts may be deleted without affecting the scope of rights.

Claims in the present disclosure can be combined in a various way. For instance, technical features in method claims of the present disclosure can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method. Other implementations are within the scope of the following claims.

## Claims

1. A method for performing communication, the method performed by an Access and Mobility Management Function (AMF) and comprising:
receiving, from the User Equipment (UE) a registration request message including information related to a dual registration;
transmitting a registration message including information related to the dual registration to a Unified Data Management (UDM);
wherein the information related to the dual registration prevents the UDM from transmitting a deregistration message to a different AMF related to the UE, based on that the UDM allows the dual registration;
receiving, from the UDM, a response message including information related to whether the dual registration is allowed; and
transmitting, to the UE, a registration response message including information related to whether the dual registration succeeded.

2. The method of claim 1, further comprising:
transmitting, to the UE, information related to whether the AMF supports the dual registration.

3. The method of claim 1 or 2,
wherein the response message includes error information, when the UDM does not allow the dual registration.

4. The method of claim 1 or 2,
wherein the registration response message includes information that the dual registration succeeded.

5. The method of any one of claims 1 to 4, further comprising:
determining whether to allow the dual registration, based on the information related to whether the dual registration is allowed, and subscriber information of the UE obtained from the UDM.

6. The method of any one of claims 1 to 5, further comprising:
transmitting, to an Authentication Server Function (AUSF), an authentication request message for requesting an authentication for the UE,
wherein the authentication request message includes information related to the dual registration; and
receiving, from the AUSF, an authentication response message.

7. The method of claim 6,
wherein the information related to the dual registration is used by the AUSF to transmit information that the UE has requested dual registration to the UDM, based on that the authentication for the UE succeeded.

8. The method of claim 6 or 7, further comprising:
transmitting, to the UE, a security mode command message, based on the authentication response message being received; and
receiving, from the UE, a security mode completion message.

9. The method of any one of claims 1 to 8, further comprising:
transmitting, to the different AMF, a request message for requesting a UE context, based on that the registration request message is a message based on a mobility registration,
wherein the request message includes the information related to the dual registration; and
receiving a UE context related to the dual registration from the different AMF, based on that the request message for requesting the UE context includes the information related to the dual registration.

10. An Access and Mobility Management Function (AMF) for performing communication, comprising:
at least one transceiver;
at least one processor; and
at least one computer memory operably connectable to the at least one processor and storing instructions that, based on being executed by the at least one processor, perform operations comprising: the method of any one of claims 1 to 9.

11. A method for performing communication, the method performed by a User Equipment (UE) and comprising:
transmitting, to an Access and Mobility Management Function (AMF), a registration request message including information related to a dual registration,
wherein the information related to a dual registration prevents a Unified Data Management (UDM) from transmitting a deregistration message to a different AMF related to the UE, based on that the UDM allows the dual registration; and
receiving, from the AMF, a registration response message including information related to whether the dual registration succeeded.

12. The method of claim 11, further comprising:
receiving, from the AMF, information related to whether the AMF supports the dual registration.

13. The method of claim 11 or claim 12, further comprising:
determining to which AMF to transmit the registration request message including the information related to the dual registration based on capability information received from one or more AMFs including the AMF.

14. The method of any one of claims 11 to 13,
wherein the registration response message further includes information indicating a primary 5G-GUTI among the plurality of 5G-GUTIs assigned to the UE, and
the method further comprising:
transmitting a registration request message including the primary 5G-GUTI via non-3GPP access, when performing registration via the non-3GPP access.

15. The method of any one of claims 11 to 14,
wherein the AMF is included in the VPLMN, and
the method further comprising:
determining that the VPLMN does not support the dual registration, based on that the registration response message does not includes information related to whether the dual registration succeeded or the registration response message includes information that the dual registration is not supported; and
transmitting a registration request message including the information related to the dual registration to an AMF of the HPLMN.

16. A User Equipment (UE) configured to operate in a wireless communication system, the UE comprising:
at least one transceiver;
at least one processor; and
at least one computer memory operably connectable to the at least one processor and storing instructions that, based on being executed by the at least one processor, perform operations comprising: the method of any one of claims 11 to 15.

17. A method for performing communication, the method performed by a Unified Data Management (UDM) and comprising:
receiving, a second Access and Mobility Management Function (AMF), a first registration message related to the User Equipment (UE);
receiving, from the second AMF, a second registration message including information related to dual registration for the UE;
wherein the information related to the dual registration prevents the UDM from transmitting a deregistration message to the first MF, if the UDM allows the dual registration;
determining whether to allow the dual registration; and
transmitting a response message including information related to whether to allow the dual registration to the second AMF.

18. The method of claim 17,
wherein the response message includes error information, based on that the dual registration is not allowed, and
the method further comprising: transmitting, the first AMF, a deregistration message, based on the UDM does not allow the dual registration.

19. The method of claim 17 or claim 18, further comprising:
receiving, from an Authentication Server Function (AUSF), a request message including information related to authentication for the UE, a serving network name, and the information related to the dual registration,
whether to allow the dual registration for the UE is determined, based on the request message and the registration message.

20. A Unified Data Management (UDM) for performing communication, the UDM comprising:
at least one transceiver;
at least one processor; and
at least one computer memory operably connectable to the at least one processor and storing instructions that, based on being executed by the at least one processor, perform operations comprising: the method of any one of claims 17 to 19.
